(19) Europäisches Patentamt
European Patent Office
Office européen des brevets

(11) **EP 2 528 225 B1**

(12) **EUROPÄISCHE PATENTSCHRIFT**

(45) Veröffentlichungstag und Bekanntmachung des Hinweises auf die Patenterteilung:
**15.01.2014 Patentblatt 2014/03**

(51) Int Cl.:
*H02P 23/00* (2006.01)     *H02P 27/12* (2006.01)
*H02M 5/45* (2006.01)     *H02P 27/14* (2006.01)

(21) Anmeldenummer: **12180705.1**

(22) Anmeldetag: **22.01.2010**

(54) **Steurung einer rotierenden elektrischen Maschine**

Control of a rotating electric machine

Commande d'une machine électrique rotative

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**28.11.2012 Patentblatt 2012/48**

(62) Dokumentnummer(n) der früheren Anmeldung(en) nach Art. 76 EPÜ:
**10151370.3 / 2 348 631**

(73) Patentinhaber: **ABB Research Ltd.**
**8050 Zürich (CH)**

(72) Erfinder: **Geyer, Tobias**
**8002 Zürich (CH)**

(74) Vertreter: **ABB Patent Attorneys**
**C/o ABB Schweiz AG**
**Intellectual Property (CH-LI/IP)**
**Brown Boveri Strasse 6**
**5400 Baden (CH)**

(56) Entgegenhaltungen:
• TOBIAS GEYER ET AL: "Model Predictive Direct Torque Control of a variable speed drive with a five-level inverter", INDUSTRIAL ELECTRONICS, 2009. IECON '09. 35TH ANNUAL CONFERENCE OF IEEE, IEEE, PISCATAWAY, NJ, USA, 3. November 2009 (2009-11-03), Seiten 1203-1208, XP031629326, ISBN: 978-1-4244-4648-3
• TOBIAS GEYER: "Generalized Model Predictive Direct Torque Control: Long prediction horizons and minimization of switching losses", DECISION AND CONTROL, 2009 HELD JOINTLY WITH THE 2009 28TH CHINESE CONTROL CONFERENCE. CDC/CCC 2009. PROCEEDINGS OF THE 48TH IEEE CONFERENCE ON, IEEE, PISCATAWAY, NJ, USA, 15. Dezember 2009 (2009-12-15), Seiten 6799-6804, XP031619580, ISBN: 978-1-4244-3871-6
• GEYER T ET AL: "Model Predictive Direct Torque Control Part I: Concept, Algorithm, and Analysis", IEEE TRANSACTIONS ON INDUSTRIAL ELECTRONICS, IEEE SERVICE CENTER, PISCATAWAY, NJ, USA, Bd. 56, Nr. 6, 1. Juni 2009 (2009-06-01), Seiten 1894-1905, XP011248687, ISSN: 0278-0046

EP 2 528 225 B1

**Beschreibung**

GEBIET DER ERFINDUNG

Diese Erfindung betrifft das Gebiet der Betriebsverfahren rotierender elektrischer Maschinen. Insbesondere betrifft die Erfindung ein Verfahren zum Betreiben einer rotierenden elektrischen Maschine, eine Steuerung für einen elektrischen Umrichter, ein Motorsystem, ein Computerprogramm und ein computerlesbares Medium.

HINTERGRUND DER ERFINDUNG

Die direkte Drehmomentsteuerung (Direct Torque Control, DTC) ist ein Verfahren zur Steuerung des Drehmoments und des elektromagnetischen Flusses in rotierenden elektromagnetischen Maschinen und Motoren, insbesondere im Mittelspannungsbereich. Ein typisches Beispiel einer derartigen Steuerung ist beispielsweise im Antrieb des ACS 6000 von ABB zu finden. Über die letzten 10 Jahre hat DTC eine hohe Verlässlichkeit, Robustheit und Leistungsfähigkeit gezeigt.

Allerdings können die Schaltverluste, die durch das Schalten von Halbleitern durch die Steuerung entstehen und die einen großen Teil oder sogar den Hauptteil des Gesamtverlustes des Antriebs darstellen, bei DTC beträchtlich sein. Daher werden Wege gesucht, diese Schaltverluste zu vermindern. Bekannt ist, dass eine derartige Verminderung von Schaltverlusten durch die so genannte modell-prädiktive direkte Drehmomentkontrolle (Model Predictive Direct Torque Control, MPDTC) erreicht werden kann, die auf einem (mathematischen) Modell des Antriebes basieren kann. Die US 7,256,561 und die EP 1 670 135 beschreiben ein derartiges Verfahren.

Neben der Minimierung von Umrichterschaltverlusten können DTC und MPDTC auch darauf abzielen, die drei Ausgangsvariablen bzw. Ausgangsgrößen der rotierenden elektrischen Maschine, nämlich das elektromagnetische Drehmoment, die Größe des Statorflusses und die Neutralpunktpotenziale) bzw. Mittelpunktpotenzial(e) innerhalb vorgegebener (Hysterese-) Grenzen zu halten.

MPDTC basiert auf einem Steuerungsalgorithmus, der ein mathematisches Modell umfassen kann, das an den zu schaltenden Umrichter und die daran angeschlossene Maschine bzw. Motor angepasst ist. Dabei werden insbesondere die zulässigen Schaltsequenzen des Umrichters über einen bestimmten Schalthorizont aufgelistet und die entsprechenden Drehmoment-, Statorfluss- und Zwischenkreismittelpunktpotenzial-Trajektorien unter Verwendung eines internen Modells des Umrichters und der Maschine berechnet. Es gibt auch Umrichter mit mehr als einem Neutralpunkt. Auch gibt es Umrichter, die andere Größen aufweisen, die unter Umständen geregelt werden müssen. Diese Trajektorien werden dabei extrapoliert, bis eine Grenze für die jeweiligen Ausgangsgrößen erreicht wird. Die zulässigen Schaltsequenzen werden anhand eines vorgegebenen Gütekriteriums evaluiert. Diese Gütekriterium bildet bspw. die Schaltverluste oder die Schaltfrequenz des Umrichters ab. In einem letzten Schritt wird eine optimale Schaltsequenz bestimmt, die dieses Gütekriterium minimiert, also bspw. minimale Schaltverluste oder eine minimale Schaltfrequenz bereitstellt. Die eben genannten Schritte werden in der Regel in jedem Steuerungszyklus ausgeführt und von der optimalen Schaltsequenz wird nur der erste Schritt (das heißt der erste Schaltübergang bzw. Schaltzustand) zur Steuerung der Leistungshalbleiter des Umrichters verwendet.

Weiter wurde MPDTC in den folgenden Publikationen beschrieben:

- "Model Predictive Direct Torque Control of a variable speed drive with a five-level inverter" INDUSTRIAL ELECTRONICS, 2009. IECON '09. 35th Annual Conference of IEEE, IEEE, Piscataway, NJ, USA, 3. November 2009, p. 1203-1208, ISBN: 978-1-4244-4648-3
- "Generalized Model Predictive Direct Torque Control: Long prediction horizons and minimization of switching losses" DECISION AND CONTROL, 2009 held jointly with the 2009 28th Chinese Control Conference. CDC/CCC 2009. Proceedings ofthe 48th IEEE conference on, IEEE, Piscataway, NJ, USA, 15. Dezember 2009, p. 6799-6804, ISBN: 978-1-4244-3 871-6
- "Model Predictive Direct Torque Control Part I: Concept, Algorithm, and Anaysis" IEEE Transactions on Industrial Electronics, IEEE Service Center, Piscataway, NJ, USA, Bd. 56, Nr. 6, 1. Juni 2009, p. 1894-1905, ISSN: 0278-0046

ZUSAMMENFASSUNG DER ERFINDUNG

Eine Verminderung der Schaltverluste kann eine signifikante Senkung der Betriebskosten des Antriebs bewirken. Darüber hinaus kann eine derartige Verminderung der Schaltverluste zu einem robusteren und verlässlicheren System führen und den Anwendungsbereich von DTC erweitern, da es verminderte Schaltverluste erlauben, die gleichen Ausrüstung mit höherer Leistung zu betreiben.

Es ist Aufgabe der Erfindung, elektrische Antriebe mit geringeren Betriebskosten und erhöhter Leistung bereitzustellen.

Diese Aufgabe wird durch den Gegenstand der unabhängigen Ansprüche gelöst. Weitere Ausführungsformen der Erfindung ergeben sich aus den abhängigen Ansprüchen.

Ein erster Aspekt der Erfindung betrifft ein Verfahren zum Betreiben einer rotierenden elektrischen Maschine.

Gemäß einer Ausführungsform der Erfindung wird die rotierende elektrische Maschine von einem Umrichter aus einem Gleichspannungsschaltkreis über wenigstens eine Phase mit elektrischem Strom versorgt wird. Der Umrichter ist dazu ausgeführt, die wenigstens eine Phase auf wenigstens zwei Spannungsniveaus zu schalten.

Die rotierende elektrische Maschine kann ein elektrischer Motor oder ein elektrischer Antrieb sein, der den elektrischen Motor und den Umrichter umfassen kann. Die rotierende elektrische Maschine kann den Umrichter und/oder eine Steuerung umfassen. In der Regel weist eine rotierende elektrische Maschine drei Phasen auf (Drehstrom). Es ist aber auch möglich, dass nur eine Phase oder eine Mehrzahl von Phasen vorhanden ist.

Gemäß einer Ausführungsform der Erfindung umfasst das Verfahren die Schritte: Erzeugen von Schaltsequenzen, wobei jede Schaltsequenz eine Folge von Schaltübergängen des Umrichters mit einem ersten Schaltübergang umfasst; Bewerten jeder der Schaltsequenzen mit einem Gütewert; Auswahl der Schaltsequenz mit einem minimalen Gütewert; Ansteuern der Schaltelemente des Umrichters mit dem ersten Schaltübergang der ausgewählten Schaltsequenz als gewählten Schaltübergang, so dass wenigstens eine Phase auf ein dem Schaltübergang entsprechendes Spannungsniveau geschaltet wird.

Ein Schaltübergang kann dabei über Schaltzustände der Schaltelemente des Umrichters bzw. über eine Kombination von Schaltzuständen der einzelnen Schaltzustände definiert werden. Beispielsweise umfasst ein Schaltübergang eine Schaltzustandskombination von Schaltelementen des Umrichters. Die Schaltelemente des Umrichters können Leistungshalbleiter sein, beispielsweise Thyristoren, IGCTs oder IGBTs.

Eine Schaltsequenz kann beispielsweise ein Vektor $U = [u(k), u(k+1), ... , u(k+N-1)]$ sein, wobei die Schaltübergänge mit Schaltzustandskombination u definiert sind. u enthält für jedes zu steuernde Schaltelement ein Schaltzustandselement, das den Schaltzustand beschreibt, also beispielsweise 1, 0 oder -1. Dies können die Schalterstellungen sein.

Gemäß einer Ausführungsform der Erfindung werden die Schaltsequenzen folgendermaßen erzeugt: (a) Erzeugen einer längeren Schaltsequenz aus einer kürzeren Schaltsequenz, wobei an die kürzere Schaltsequenz wenigstens ein möglicher Schaltübergang gehängt wird, um die längere Schaltsequenz zu erzeugen; (b) Berechnen von Ausgangsgrößen der elektrischen Maschine, des Umrichters und/oder des Antriebes für die längere Schaltsequenz basierend auf den Schaltübergängen der längeren Schaltsequenz; (c) Verwerfen der längeren Schaltsequenz, falls berechnete Ausgangsgrößen (bzw. wenigstens eine Ausgangsgröße) nicht innerhalb vordefinierter Grenzen liegen und/oder berechnete Ausgangsgrößen sich mit zunehmender Zeit von einer vordefinierten Grenze entfernen.

Die kürze Schaltsequenz hat beispielsweise die Länge m und die längere Schaltsequenz beispielsweise die Länge n, wobei n>=m+1. Falls die Schaltsequenz Pausenelemente enthält, kann die längere Schaltsequenz um mehr als einen Schritt länger als die kürze Schaltsequenz sein. Allerdings ist auch der Fall n=m+1 möglich.

Gemäß einer Ausführungsform der Erfindung wird eine erste Schaltsequenz oder Startschaltsequenz (der Länge 0) mit einem vorhergehend gewählten Schaltübergang initialisiert. In diesem Fall ist die erste Schaltsequenz die längere Schaltsequenz, für die die Schritte (b) und (c) durchgeführt werden.

Gemäß einer Ausführungsform der Erfindung werden weiterer Schaltsequenzen, die insbesondere länger als n sind, für die nicht verworfene längere Schaltsequenz gemäß den Schritten (a) bis (c) erzeugt.

Mit anderen Worten wird iterativ ein Baum von Schaltübergängen erzeugt, wobei jede Schaltsequenz durch den Weg von der Wurzel des Baumes zu einem Blatt des Baumes gegeben sein kann. Die zu berechnenden Ausgangsgrößen können dabei das Drehmoment oder der Fluss der rotierenden elektrischen Maschine oder der oder die Mittelpunktpotentiale des Gleichstromzwischenkreises im Umrichters oder auch die Spannung(en) über Kapazitäten oder der Strom oder die Ströme durch Spulen des Umrichters sein. Die Ausgangsgrößen können zeitlich abhängige Größen sein und werden für ein Intervall berechnet, das beim aktuellen Zeitpunkt beginnt und für eine gewisse Zeit in die Zukunft reicht.

Das heißt, dass bei einer rotierenden elektrischen Maschine bzw. einem Antrieb Schaltverluste mit einem iteratives Steuerverfahren minimiert werden können, das optimale Schaltzustände bzw. Schaltsequenzen voraus berechnet.

Gemäß einer Ausführungsform der Erfindung umfasst das Verfahren: Erzeugen einer (längeren) zulässigen Schaltsequenzen aus einer kürzeren zulässigen Schaltsequenzen durch Anhängen von Schaltübergängen an die kürze Schaltsequenz mittels eines rekursiven bzw. iterativen Algorithmus. Der Algorithmus kann mit einer Schaltsequenz der Länge 0 aus einem vorhergehend gewählten Schaltübergang (bzw. dem aktuell am Umrichter anliegenden Schaltübergang) initialisiert werden. Die Zulässigkeit der längeren Schaltsequenz kann durch Simulieren oder Approximieren von wenigstens einer Ausgangsgröße erfolgen, die beispielsweise den oben genannten Regeln genügen muss.

Diese iterative Optimumsbestimmung der Schaltsequenzen wird in der Regel pro Schaltzyklus des Umrichters ausgeführt.

Der Algorithmus bzw. das Verfahren kann sequentiell abgearbeitet werden, das heißt anstatt zuerst die Schaltsequenzen zu erzeugen und dann die zugehörigen Trajektorien der Ausgangsgrößen zu erzeugen, werden die Schaltsequenzen schrittweise aufgebaut, indem zulässige Schaltübergänge verzweigt bzw. angehängt werden.

Dazu kann beispielsweise ein Stapelspeicher verwendet werden. Ein Stapel bzw. Stapelspeicher kann dabei ein Speicher sein, in dem mittels einer Funktion ("Push") ein Objekt (hier Schaltsequenz) auf den Stapel gelegt werden kann und mittels einer weiteren Funktion ("Pop") das oberste auf dem Objektstapel liegende Objekt geholt werden kann. Der Algorithmus kann mit einer rekursiven Funktion zusammen mit einem Stapelspeicher implementiert werden.

Gemäß einer Ausführungsform der Erfindung kann das MPDTC-Verfahren bzw. der MPDTC-Algorithmus auf einem Last-In-First-Out-Stapelmodell basieren. Der Algorithmus startet beim gegenwärtigen Zeitschritt k. Dann untersucht der Algorithmus iterativ den Baum von zulässigen Schaltsequenzen vorwärts in der Zeit. Bei jedem Zwischenschritt müssen alle Schaltsequenzen Trajektorien der Ausgangsgrößen aufweisen, die zulässig sind. Zulässige Schaltsequenzen können auch Kandidatensequenzen oder Kandidatenschaltsequenzen genannt werden. Zulässige Schaltsequenzen können Schaltsequenzen sein, deren Ausgangsgrößen innerhalb ihrer entsprechenden Grenzen liegen oder in die richtige Richtung zeigen bzw. sich einer Grenze annähern. Die beiden letzten Fälle beziehen sich dabei darauf, dass eine Ausgangsvariable bzw. eine Ausgangsgröße nicht notwendigerweise innerhalb der zulässigen Grenzen liegt, aber der Grad der Grenzverletzung mit jedem Zeitschritt innerhalb des Horizonts abnimmt.

Eine Kandidatenschaltsequenz, das heißt eine nicht verworfene Schaltsequenz, ergibt Trajektorien von Ausgangsgrößen, die zu jedem Zeitschritt den entsprechenden Regeln des Schritt (c) genügen. Damit kann sichergestellt werden, dass die vorgegebenen Grenzen jederzeit während eines stationären Betriebes der rotierenden elektrischen Maschine eingehalten werden. Durch diese Maßnahme kann der Drehmoment-THD (Total Harmonic Distortion) der rotierenden elektrischen Maschine reduziert werden.

Es ist möglich, dass eine Kombination der eben genannten Bedingungen oder Regeln für die Ausgabevariable oder Ausgangsgrößen gilt. Beispielsweise kann eine Schaltsequenz zulässig sein, wenn das Drehmoment und das Mittelpunktpotenzial innerhalb ihrer vordefinierten Grenzen liegen und der Statorfluss in die richtige Richtung zeigt.

Die Rechenkomplexität des MPDTC-Verfahrens steht in direkter Beziehung zu der Anzahl der zulässigen Schaltübergänge, die durch die Umrichtertopologie vorgegeben werden (hauptsächlich durch die Anzahl der Spannungsniveaus, die der Umrichter erzeugen kann) und die Länge des Schalthorizonts oder. des Vorhersagehorizonts der Schaltsequenz. Ein Vorhersagehorizont kann dabei als die Länge einer Schaltsequenz, d. h. die Anzahl der Zeitschritte, die zur Abarbeitung der Schaltsequenz benötigt wird, definiert werden

Lange Schalthorizonte erhöhen die Leistungsfähigkeit von MPDTC wesentlich, indem sie die Schaltverluste und/oder die gesamte harmonische Verzerrung des Stroms oder des Drehmoments (Total Harmonic Distortion, THD) reduzieren. Allerdings können sie auch zu einer großen Rechenlast führen, da die Anzahl der möglichen Schaltsequenzen kombinatorisch explodieren kann. Daher war es bis jetzt nur möglich, MPDTC auf einer Hardware zu implementieren und auszuführen, wenn der Algorithmus auf sehr kurze Schalthorizonte, wie beispielsweise mit Länge 1 oder 2 eingeschränkt wurde. Die vorliegende Erfindung ermöglicht es, die Rechenlast für MPDTC mit langen Schalthorizonten zu reduzieren.

Gemäß einer Ausführungsform der Erfindung basiert der Gütewert auf den zu erwartenden Schaltverlusten des Umrichters oder der zu erwartenden Schaltfrequenz des Umrichters bei der jeweiligen Schaltsequenz. In der Regel gilt, dass je geringer der Gütewert ist, die Schaltverluste umso geringer ausfallen.

Mehrere Schaltübergänge generieren eine Vielzahl an Schalthandlungen der Schaltelemente des Umrichters, wodurch die Schaltfrequenz der Schaltelemente ansteigt. Eine solche hohe Schaltfrequenz erzeugt aber insbesondere in Leistungshalbleiterschaltern als Schaltelemente Wärmeverluste (durch die Schaltverluste), wodurch die Leistungshalbleiterschalter schneller altern, beschädigt oder gar zerstört werden können. Insgesamt können die Schaltverluste des Umrichters auch indirekt über die Schaltfrequenz abgeschätzt werden.

Es ist auch möglich, dass die Gütefunktion, das heißt die Funktion, mit der der Gütewert einer Schaltsequenz berechnet wird, eine Funktion der Zeitschritte der Schaltsequenz (d. h. der Länge der Schaltsequenz) und der Gesamtzahl der Schaltübergänge ist.

Gemäß einer Ausführungsform der Erfindung ist die Gütefunktion eine Funktion der Summe der Schaltverluste, die durch die einzelnen Schaltübergänge entstehen, und der Länge des Schalthorizonts und/oder dem Vorhersagehorizonts und/oder der Länge der Schaltsequenz. Die Schaltverluste können basierend auf den Statorströmen der rotierenden elektrischen Maschine und/oder des Umrichters berechnet werden, die eine Funktion der Stator- und der Rotorflüsse sind. Falls die Steuerung ein internes mathematisches Modell der rotierenden elektrischen Maschine und/oder des Umrichters aufweist, können diese Flüsse oder die Statorströme ein Hauptbestandteil dieses Modells sein. Gemäß dieser Ausführungsform kann es möglich sein, die Schaltverluste deutlich (bis zu 22%) gegenüber der einfachen Gütefunktion zu reduzieren, die auf der Schaltfrequenz basiert. Diese Berechnungen können "offline" durchgeführt werden und die Ergebnisse in einer Nachschlagetabelle gespeichert werden, auf die das Verfahren während des Betriebs der Maschine zugreifen kann.

Gemäß einer Ausführungsform der Erfindung enthalten die Schaltsequenzen in der Folge der Schaltübergange Pausenelemente, wobei ein Pausenelement eine Schaltpause nach einem Schaltübergang definiert. Durch Pausen zwischen den Schaltübergängen können die Schaltverluste weiter reduziert werden.

Gemäß einer Ausführungsform der Erfindung wird die Schaltpause durch das Berechnen von Ausgangsgrößen ermittelt. Dabei kann das Berechnen von Ausgangsgrößen auf einem mathematischen Modell der rotierenden elektrischen Maschine, des Umrichters und oder des Antriebes oder auf einer Approximation basieren. In der Regel sollten sich die Ausgangsgrößen während der Schaltpause innerhalb ihrer Grenzen bewegen oder den oben erwähnten Regeln genügen.

Ein mathematisches Antriebsmodells des Umrichters und der rotierenden elektrischen Maschine kann verwendet werden, um die Anzahl der Schritte zu berechnen, bei der die erste Trajektorie einer Ausgangsgröße (bspw. Drehmoment, Fluss oder Mittelpunktpotenzial) eine der vordefinierten Grenzen trifft bzw. sich diesen annähert. Dies kann die Genauigkeit der Vorhersagen erhöhen und damit die Steuerungsperfomance des Verfahrens (beispielsweise in Bezug auf die Schaltverluste und das Drehmoment) erhöhen.

Gemäß einer Ausführungsform der Erfindung umfasst das Verfahren weiter: Erzeugen einer Schaltsequenz aus Schaltübergängen und Pausenelementen basierend auf einem verallgemeinerten Schalthorizont, der definiert, in welcher Reihenfolge Schaltübergänge und Pausenelemente an die Schaltsequenz angefügt werden.

Durch die Pausenelemente soll erreicht werden, dass so wenig wie möglich geschaltet wird, um die Schaltverluste so gering wie möglich zu halten. Daher werden Schaltpausen mit möglichst großer Länge eingefügt. Die Länge der Schaltpausen kann durch das Verfahren bestimmt werden und kann sich daran orientieren, dass Ausgangsgrößen des Antriebes den oben erwähnten vordefinierten Regeln genügen.

Zum Erstellen der Schaltsequenzen kann ein verallgemeinerter Schalthorizont verwendet werden. Der verallgemeinerte Schalthorizont kann eine Mehrzahl von Schaltelementen (die definieren, das an der entsprechenden Position in der Schaltsequenz ein Schaltübergang stehen kann) umfassen. Zwischen, vor und nach den Schaltelementen kann der verallgemeinerte Schalthorizont Pausenelemente umfassen. Um dies zu beschreiben, wird eine Notation mit "S" und "E" bzw. "e" verwendet (die Pausenelemente können auch als Extrapolierelemente oder Erweiterungselemente aufgefasst werden). Ein Beispiel für einen verallgemeinerten Schalthorizont ist "SSESE". Mit einem verallgemeinerten Schalthorizont können die Schaltverluste um bis zu 20% verglichen mit einem einfachen Schalthorizont der Länge zwei, reduziert werden.

Zusätzlich kann ein verallgemeinerter Schalthorizont mit einem Pausenelement "e" beginnen, das für eine optionale Wartepause am Anfang der Schaltsequenz steht. Diese Wartepause kann analog der Wartepausen zum Pausenelement "E" bestimmt werden. Dadurch kann der Vorhersagehorizont deutlich verlängert werden, so dass eine genauere Vorhersage gemacht werden kann. Dadurch werden die Schaltverluste in der Regel verringert.

Der verallgemeinerte Schalthorizont mit seiner oberen Grenze basierend auf der Anzahl der Schaltübergänge und Warteschritte kann als eine Alternative zu einem festen einfachen Prädiktions- bzw. Vorhersagehorizont mit einer festen Anzahl von Zeitschritten betrachtet werden. Der verallgemeinerte Schalthorizont kann zu einer zeitlich variablen Länge der Schaltsequenzen und daher zu unterschiedlich langen Prädiktionshorizonten führen.

Gemäß einer Ausführungsform der Erfindung wird beim Berechnen von Ausgangsgrößen ermittelt, zu welchem Zeitpunkt in der Zukunft eine Trajektorie einer Ausgangsgröße eine obere oder untere vordefinierte Grenze trifft.

Gemäß einer Ausführungsform der Erfindung erfolgt die Ermittlung des Zeitpunkts analytisch, unter Verwendung eines Optimierungsverfahren zur Nullstellen-Ermittlung, durch Approximation von trigonometrischen Funktion durch Taylorreihen und/oder durch Approximation von trigonometrischen Funktion durch stückweise polynomiale Funktionen.

Gemäß einer Ausführungsform der Erfindung fliest der Statorflusswiderstand beim Ermitteln des Zeitpunkts in die Berechnung ein.

Gemäß einer Ausführungsform der Erfindung beruht das Berechnen von Trajektorien von Ausgangsgrößen auf einem mathematischen Model der rotierenden Maschine oder des Antriebes und einer Interpolation. Im Gegensatz zur Extrapolation hat die Interpolation den Vorteil, dass die Endpunkte der Trajektorie besser mit der Wirklichkeit übereinstimmen als dies bei einer Extrapolation der Fall sein kann.

Gemäß einer Ausführungsform der Erfindung werden die Ausgangsgrößen in einem Zeitintervall interpoliert, das eine vorbestimmte Anzahl, beispielsweise wenigstens 10, diskrete Zeitschritte umfasst.

Gemäß einer Ausführungsform der Erfindung werden im Intervall bzw. an dessen Rändern für wenigstens drei Zeitpunkte die Ausgangsgrößen mit dem mathematischen Modell berechnet.

Gemäß einer Ausführungsform der Erfindung erfolgt die Interpolation mit einem quadratischen Polynom.

Gemäß einer Ausführungsform der Erfindung umfasst das Verfahren weiter: Berechnen eines Gütewerts für die (insbesondere nicht verworfene) Schaltsequenz der Länge n während der Iteration.

Gemäß einer Ausführungsform der Erfindung umfasst das Verfahren weiter: Berechnen einer unteren Grenze für Gütewerte basierend auf bereits berechneten Gütewerten von vollständigen Schaltsequenzen.

Gemäß einer Ausführungsform der Erfindung umfasst das Verfahren weiter: Verwerfen von Schaltsequenzen, deren Gütewert die untere Grenze für Gütewerte überschreitet bzw. deren Gütewert größer als die untere Grenze für Gütewerte ist.

Gemäß einer Ausführungsform der Erfindung umfasst das Verfahren weiter: Berechnen des Gütewertes unter Verwendung einer oberen Grenze für eine maximal erwartete Länge einer Schaltsequenz oder ihres Vorhersagehorizonts.

Gemäß einer Ausführungsform der Erfindung wird zuerst, d. h. am Anfang oder vor der Rekursion, der Gütewert einer vielversprechenden Schaltsequenz berechnet. Eine vielversprechende Schaltsequenz kann dabei eine Schaltsequenz sein, die schon vor dem Iterationsverfahren mit einem guten Gütewert versehen wurde bzw. für diese bereits vor dem Iterationsverfahren ein guter Gütewert berechnet wurde.

Gemäß einer Ausführungsform der Erfindung basiert die vielversprechende Schaltsequenz auf einer optimalen Schaltsequenz eines vorhergehenden Steuerungszyklus.

Gemäß einer Ausführungsform der Erfindung basiert die vielversprechende Schaltsequenz auf einer optimalen Schaltsequenz, die in einem vorhergehenden Optimierungsschritt mit einem kürzeren Schalthorizont als einem aktuellen Schalthorizont berechnet wurde.

Gemäß einer Ausführungsform der Erfindung kann dazu ein zweistufiges Verfahren angewendet werden. Zuerst (in einem ersten Schritt) wird das Optimierungsproblem mit einem kurzen Schalthorizont, bspw. "eSE" gelöst, beispielsweise mit dem obenstehend und untenstehend beschriebenen Verfahren bzw. Algorithmus. Danach wird in einem zweiten Schritt ein langer Schalthorizont, der länger als der kurze Schalthorizont ist, verwendet, bspw. "eSSESE". Das obenstehend und untenstehend beschriebene Verfahren wird dabei beispielsweise so lange durchgeführt, bis die verfügbare Rechenzeit abgelaufen ist. Für den zweiten Schritt wird die Lösung des ersten Schritts als Startwert verwendet ("Warmstart"-Algorithmus, siehe auch weiter unten).

Das erste Problem kann relativ schnell gelöst werden und eine verhältnismäßig gute Lösung (Schaltsequenz) kann berechnet werden. Diese Lösung stellt sicher, dass ein Schaltzustand an den Umrichter geschickt wird, der schaltbar ist, also beispielsweise die Schaltbeschränkungen des Umrichters einhält, und der sicherstellt, dass die Ausgangsgrößen sich nicht von den definierten Grenzen entfernen (instabil werden) und der eine akzeptable Performance liefert (relativ niedrige Schaltverluste usw). Es kann sichergestellt werden, dass das kleine Problem innerhalb der verfügbaren Rechenzeit gelöst werden kann. In der Regel wird im zweiten Schritt eine bessere Lösung gefunden, die an den Umrichter geschickt werden kann.

Gemäß einer Ausführungsform der Erfindung wird eine mit höchster Priorität zu untersuchende Schaltsequenz ermittelt, wobei während der nächsten Iteration (d. h. während des nächstens Iterationsschritts bzw. im gleichen Iterationsschritt) die Schaltsequenz mit höchster Priorität untersucht wird.

Gemäß einer Ausführungsform der Erfindung werden zu untersuchenden Schaltsequenzen gemäß ihrer Priorisierung sortiert.

Gemäß einer Ausführungsform der Erfindung erfolgt die Priorisierung anhand wenigstens einer der folgenden Regeln: Priorisierung von Schaltsequenzen für die eine höhere Wahrscheinlichkeit besteht, dass sie zu einem niedrigen Gütewert führen; Priorisierung von Schaltsequenzen, für die eine höhere Wahrscheinlichkeit besteht, dass sie die Ausgangsgrößen innerhalb vordefinierter Grenzen halten und/oder die Ausgangsgrößen sich mit zunehmender Zeit den vordefinierten Grenze annähern; Priorisierung von Schaltsequenzen, die einen Schaltübergang aufweisen, für den eine höhere Wahrscheinlichkeit dafür besteht, dass er zu einer zulässigen Schaltsequenz oder auch zu einer Schaltsequenz mit hoher Güte führt; Priorisierung von Schaltsequenzen, für die aufgrund einer Abschätzung erwartet wird, dass sie zu langen Schaltpausen ohne Schaltübergänge führen; Priorisierung von (unvollständigen) Schaltsequenzen anhand ihrer Gütewerte; Priorisierung von Schaltsequenzen anhand ihrer Länge.

Gemäß einer Ausführungsform der Erfindung umfasst das Verfahren weiter: Beenden der Erzeugung der Schaltsequenzen, wenn alle Schaltsequenzen bis zu einer vorbestimmten Länge erzeugt wurden. Die vorbestimmte Länge kann dabei die Länge des Schalthorizonts oder ein vorbestimmter Prädiktionshorizont sein.

Gemäß einer Ausführungsform der Erfindung umfasst das Verfahren weiter: Beenden der Erzeugung der Schaltsequenzen, wenn eine obere Grenze für die Anzahl der erzeugten Schaltsequenzen erreicht ist oder die verfügbare Rechenzeit abgelaufen ist.

Gemäß einer Ausführungsform der Erfindung umfasst das Verfahren weiter: Beenden der Erzeugung der Schaltsequenzen, wenn eine Schaltsequenz ermittelt wurde, deren Gütewert eine untere Grenze für Gütewerte um weniger als einen definierten Prozentsatz, bspw. 5%, übersteigt. Mit anderen Worten kann auch suboptimales MPDTC durchgeführt werden, in der zwar nicht der optimale, aber eine gute Schaltsequenzen ermittelt wird. Die Motivation, suboptimales MPDTC durchzuführen, ergibt sich aus dem Folgenden:

Lange Schalthorizonte führen zu einem ausgezeichneten Verhalten. In einer Verzweigungs- und Begrenzen-Suche (die weiter unten ausführlicher beschrieben wird), auch mit engen Grenzen, wird jedoch die optimale oder nahe am Optimum liegende Lösung sehr schnell während einer Baumsuche gefunden. Trotzdem wird ein großer Teil der Rechenzeit darauf verwendet, um zu bestätigen, dass das Optimum tatsächlich gefunden wurde.

Somit ergibt sich, dass, wenn der Algorithmus gestoppt wird, bevor eine derartige Bestätigung oder auch Zertifikat gefunden wurde (das heißt dass kein ungeprüfter Knoten mit einem Gütewert niedriger als dem gegenwärtig minimalen Gütewert vorhanden ist), das Optimum wahrscheinlich bereits gefunden wurde.

Beim MPDTC-Verfahren wird nur die erste Schaltposition bzw. der erste Schaltübergang aus der Schaltsequenz auf den Antrieb bzw. dessen Umrichter angewendet. Damit muss nur das erste Element der Schaltsequenz optimal sein, aber nicht notwendigerweise der restliche Teil der Schaltsequenz.

Darüber hinaus kann eine gute Kandidatenschaltsequenz mit einem kurzen Schalthorizont schnell gefunden werden. Diese kurze Schaltsequenz kann dazu dienen, mittels eines weiter unten näher beschriebenen "Warmstart"-Algorithmus eine Baumsuche in einem Baum mit einem langen Schalthorizont zu beginnen.

Zusammenfassend kann es besser sein, anstatt kurze Schalthorizonte zu verwenden und sicherzustellen, dass die optimale Lösung unter allen Umständen gefunden wird, lange (eventuell verallgemeinerte) Schalthorizonte zu verwenden und unter Umständen suboptimale Lösungen zu akzeptierten, die jedoch unter Umständen zu einem MPDTC-Verfahren führen, das eine bessere Performance aufweisen kann.

Ein weiter Aspekt der Erfindung betrifft eine Steuerung für einen elektrischen Umrichter, die dazu ausgeführt ist, das Verfahren wie im Vorstehenden und im Folgenden beschrieben durchzuführen.

Ein weiter Aspekt der Erfindung betrifft einen Umrichter, beispielsweise mit einer Steuerung, der dazu ausgeführt ist, das Verfahren wie im Vorstehenden und im Folgenden beschrieben durchzuführen.

Beispielsweise ist der Umrichter an seinem Eingang an eine Gleichspannung angeschlossen. An seinem Ausgang (mehrere bzw. drei Phasen, Drehstrom) erzeugt der Umrichter Wechselspannung. Dazu können Schaltelemente verwendet werden (beispielsweise Thyristoren, IGCTs oder IGBTs), die von der Steuerung geschaltet werden. Die Spannungen können dabei von etwa 100V bis zu 200 kV groß sein. D. h. der Umrichter kann ein Niederspannungs-, Mittelspannungs- und Hochspannungsumrichter sein. Die vom Umrichter geschalteten Ströme können bis zu 10.000 A betragen.

Insbesondere kann der MPDTC-Steuerungsalgorithmus bzw. das -verfahren für jeden Mehrpuntumrichter eingesetzt werden.

Ein weiter Aspekt der Erfindung betrifft ein Motorsystem das eine rotierende elektrische Maschine und einen elektrischen Umrichter mit einer Steuerung, der dazu ausgeführt ist, die rotierende elektrische Maschine mit Strom zu versorgen und das Verfahren wie im Vorstehenden und im Folgenden beschrieben durchzuführen.

Ein weiter Aspekt der Erfindung betrifft ein Computerprogramm, das, wenn es auf einem Prozessor ausgeführt wird, den Prozessor anleitet, die Schritte des Verfahrens wie im Vorstehenden und im Folgenden beschrieben durchzuführen.

Das Computerprogramm bzw. der MPDTC-Steuerungsalgorithmus kann auf beliebiger Rechenhardware implementiert werden, die beispielsweise DSPs und FPGAs umfasst.

Ein weiter Aspekt der Erfindung betrifft ein computerlesbares Medium, auf das das Computerprogramm gespeichert ist.

Ein computerlesbares Medium kann dabei eine Diskette, eine Harddisk, ein USB-Speichergerät, ein RAM, ein ROM, eine CD, eine DVD oder ein EPROM sein. Ein computerlesbares Medium kann auch ein Datenkommunikationsnetzwerk, wie beispielsweise das Internet, das den Download eines Programmcodes ermöglicht, sein.

Zusammenfassend können sich aus den beschriebenen Ausführungsformen die folgenden Vorteile ergeben: Die Ausführungsformen des Verfahrens machen sehr lange Schalthorizonte möglich, die aus einer Mehrzahl von Schaltübergängen bestehen, die durch Pausenelemente verbunden sein können. Erste Versuche legen nahe, dass mit einer Kombination von Ausführungsformen des Verfahrens die Schaltverluste um bis zu 60% reduziert werden können, während die gesamten harmonischen Verzerrungen (Total Harmonic Distortion, THD) des Drehmoments zur gleichen Zeit um etwa 20% verbessert werden können. Diese Versuche wurden auf einem so genannten dreiphasigen Dreipunkt-Mittelspannungsumrichter gemacht, der eine Induktionsmaschine antreibt. Verglichen mit dem einfachen MPDTC-Algorithmus mit einem einfachen Schalthorizont von lediglich zwei Schritten wurden die Schaltverluste bis zu 40% reduziert, während das Drehmoment-THD konstant gehalten wurde.

Mit den Ausführungsformen werden Möglichkeiten beschrieben, um ein Erzeugen und Untersuchen von Schaltsequenzen zu vermeiden, wenn diese suboptimal sind. Dadurch kann die durchschnittliche Rechenzeit stark reduziert werden. Darüber hinaus können Stoppkriterien angegeben werden, bei denen sichergestellt werden kann, dass eine gute Lösung für eine Schaltsequenz gefunden wird. Dadurch wird die maximale Rechenzeit begrenzt.

Im Allgemeinen beschreiben die Ausführungsformen Techniken, um einen MPDTC-Algorithmus derart zu modifizieren und zu verbessern, dass er technisch betrachtet effizient wird, um auf diese Weise ein Verfahren mit langen Schalthorizonten auf zur Zeit verfügbarer Rechenhardware umzusetzen. Simulationsergebnisse zeigen, dass der Rechenaufwand des schlimmsten Falls um ein oder zwei Größenordnungen reduziert werden kann, während die Steuerungsperfomance (vor allem in Bezug auf Schaltverluste und THD) im Wesentlichen davon unbeeinflußt bleibt.

Im Folgenden werden Ausführungsbeispiele der Erfindung mit Bezug auf die beiliegenden Figuren detailliert beschrieben.

KURZE BESCHREIBUNG DER FIGUREN

Fig. 1 zeigt eine dreiphasige Umrichterschaltung zur Schaltung von drei Spannungsniveaus gemäß einer Ausführungsform der Erfindung.

Fig. 2a zeigt Drehmoment-Trajektorien gemäß einer Ausführungsform der Erfindung.

Fig. 2b zeigt Statorfluss-Trajektorien gemäß einer Ausführungsform der Erfindung.

Fig. 2c zeigt Schaltsequenzen gemäß einer Ausführungsform der Erfindung.

Fig. 3 zeigt einen Suchbaum gemäß einer Ausführungsform der Erfindung.

Fig. 4 zeigt ein Flussdiagramm für einen MPDTC-Verfahren gemäß einer Ausführungsform der Erfindung.

Fig. 5 zeigt eine Möglichkeit gemäß einer Ausführungsform der Erfindung, die Trajektorien von Ausgangsgrößen zu berechnen.

Fig. 6 zeigt ein Flussdiagramm zur Berechnung von Schnittpunkten von Trajektorien mit Grenzen gemäß einer Ausführungsform der Erfindung.

Fig. 7 zeigt eine Trajektorie einer Ausgangsgröße gemäß einer Ausführungsform der Erfindung.

Fig. 8 zeigt ein Flussdiagramm zum Bestimmen eines Schnittpunkts einer Trajektorie mit einer Grenze gemäß einer Ausführungsform der Erfindung.

Fig. 9 zeigt eine Entwicklung von Gütewerten gemäß einer Ausführungsform der Erfindung.

Fig. 10 zeigt einen Ausschnitt eines Flussdiagramms für einen MPDTC-Verfahren gemäß einer Ausführungsform der Erfindung.

Fig. 11 zeigt ein Histogramm mit der Anzahl der Knoten pro Niveau eines Suchbaumes gemäß einer Ausführungsform der Erfindung.

Fig. 12 zeigt den Verlauf der aktuellen Güte während einer Güteberechnung gemäß einer Ausführungsform der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

DETAILIERTE BESCHREIBUNG VON AUSFÜHRUNGSBEISPIELEN

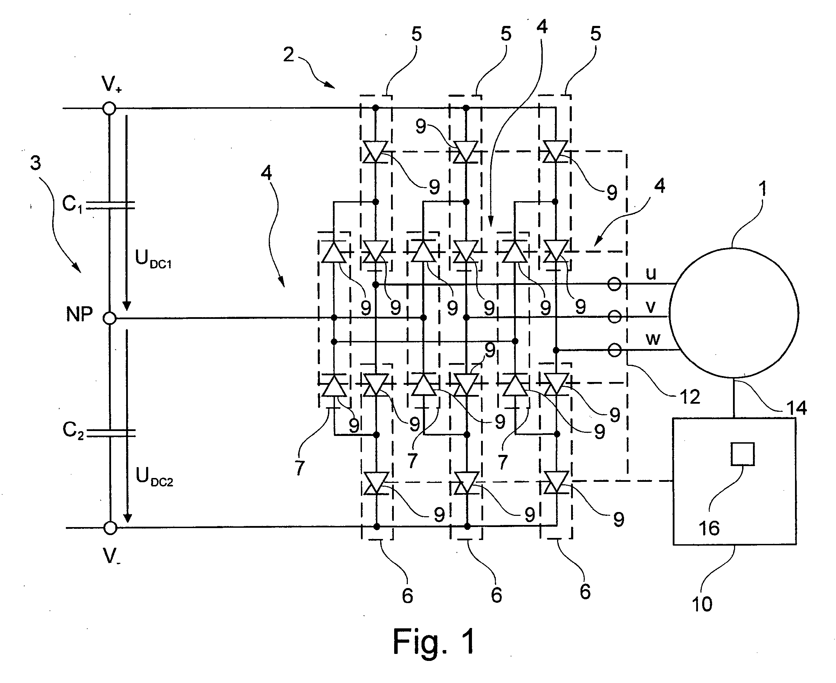

In Fig. 1 ist eine dreiphasigen Umrichterschaltung 2 für einen Umrichter 2 zur Schaltung von drei Spannungsniveaus gezeigt, wobei eine rotierende elektrische Maschine 1 über ihren Phasen u, v, w mit einem Gleichspannungskreis 3 der Umrichterschaltung 2 verbunden ist. Allgemein kann die rotierende elektrische Maschine 1 mit einer Umrichterschaltung 2 zur Schaltung von m Spannungsniveaus verbunden sein, wobei dann m ≥ 2 ist. Gemäß Fig. 1 wird der Gleichspannungskreis 3 durch einen ersten Kondensator $C_1$ und durch einen in Serie zum ersten Kondensator $C_1$ geschalteten zweiten Kondensator $C_2$ gebildet. Der Gleichspannungskreis 3 weist am ersten Kondensator $C_1$ einen ersten Hauptanschluss $V_+$, am zweiten Kondensator $C_2$ einen zweiten Hauptanschluss $V_-$ und einen durch die zwei seriell verbundenen Kondensatoren $C_1$, $C_2$ gebildeten Teilanschluss NP (einen Zwischenkreismittelpunkt) auf. Darüber hinaus umfasst die Umrichterschaltung 2 ein für jede Phase u, v, w vorgesehenes Teilumrichtersystem 4, welches jeweils durch eine erste Schaltgruppe bzw. Schaltelement 5, durch eine zweite Schaltgruppe bzw. Schaltelement 6 und durch eine dritte Schaltgruppe bzw. Schaltelement 7 gebildet ist, wobei jede Schaltgruppe 5, 6, 7 durch zwei in Serie geschaltete Leistungshalbleiterschalter 9 gebildet ist. Weiterhin ist bei jedem Teilumrichtersystem 4 die erste Schaltgruppe 5 mit dem ersten Hauptanschluss $V_+$ und die zweite Schaltgruppe 6 mit dem zweiten Hauptanschluss $V_-$ verbunden. Ferner ist die erste Schaltgruppe 5 mit der zweiten Schaltgruppe 6 seriell verbunden, wobei der Verbindungspunkt der ersten Schaltgruppe 5 mit der zweiten Schaltgruppe 6 einen Phasenanschluss bildet. Die dritte Schaltgruppe 7, welche als Klemmschaltgruppe ausgebildet ist, ist mit der ersten Schaltgruppe 5, insbesondere mit dem Verbindungspunkt der zwei in Serie geschalteten Leistungshalbleiterschalter 9 der ersten Schaltgruppe 5, verbunden. Zudem ist die dritte Schaltgruppe 7 mit der zweiten Schaltgruppe 6, insbesondere mit dem Verbindungspunkt der zwei in Serie geschalteten Leistungshalbleiterschalter der zweiten Schaltgruppe 6, verbunden. Darüber hinaus ist die dritte Schaltgruppe 7, insbesondere der Verbindungspunkt der zwei in Serie geschalteten Leistungshalbleiterschalter der dritten Schaltgruppe 7, mit dem Teilanschluss NP verbunden.

Die Leistungshalbleiterschalter 9 der ersten und zweiten Schaltgruppe 5, 6 sind als ansteuerbare bidirektionale Leistungshalbleiterschalter ausgebildet, wobei die Leistungshalbleiterschalter der dritten Schaltgruppe 7 als unidirektionale nichtansteuerbare Leistungshalbleiterschalter 9 ausgebildet sind. Es ist aber auch denkbar, das auch die Leistungshalbleiterschalter der dritten Schaltgruppe 7 als ansteuerbare bidirektionale Leistungshalbleiterschalter 9 ausgebildet sind. Die Leistungshalbleiteschalter 9 sind beispielsweise Thyristoren, IGCTs oder IGBTs.

In der Fig. 1 ist eine Steuerung 10 des Umrichters 2 bzw. des Antriebssystems (Motorsystems), das den Umrichter 2 und die elektrische Maschine 1 umfasst, dargestellt. Die Steuerung 10 kann über Steuerleitungen 12 die Leistungshalbleiter 9 und damit die Schaltgruppen bzw. Schaltelemente 5, 6, 7 ansteuern und diese schalten. Darüber hinaus kann es möglich sein, dass die Steuerung über eine optionale Messleitung 14 Messsignale aus der elektrischen Maschine 1 empfängt. Über diese Messignale kann die Steuerung 10 dann Ausgangsgrößen der rotierenden elektrischen Maschine 1 ermitteln. Die beschriebenen Algorithmen und Verfahren können als Programmmodule auf einem Prozessor 16 der Steuerung 10 ausgeführt werden.

Gemäß dem Verfahren werden die Phasen u, v, w der Umrichterschaltung 2, bei der es sich allgemein um eine Umrichterschaltung 2 zur Schaltung von m Spannungsniveaus handeln kann, in jedem Steuerungszyklus der Steuerung 10 in einem mit dem Gleichspannungskreis 3 nach einem ausgewählten Schaltübergang von Schaltzuständen der Leistungshalbleiterschaltern 9 der Umrichterschaltung 2 verbunden.

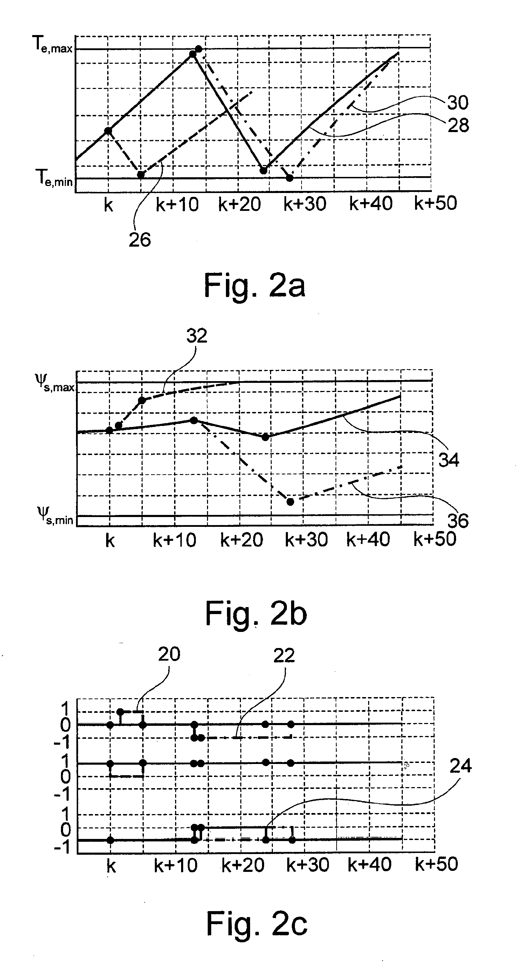

In der Fig 2c sind drei Kandidatenschaltsequenzen 20, 22, 24 gezeigt. In der Fig. 2a und 2b sind die ihnen zugeordneten Drehmoment-Trajektorien 26, 28, 30 und Statorfluss-Trajektorien 32, 34, 36 zwischen ihren jeweiligen oberen und unteren Grenzen dargestellt. Die Zeitachse wird in den drei Diagrammen durch Abtast- oder diskrete Zeitschritte angegeben, wobei das Abtastintervall, das heißt die Zeit zwischen beispielsweise k und k+1, ts=25 μs betragen kann. Der aktuelle Abtastzeitpunkt ist dabei k.

In der Fig. 2c sind Schaltsequenzen 20, 24, 26 dargestellt, die mit einem Schalthorizont erzeugt wurden, der die Elemente "SSESE" aufweist, und für ein Schalten zu den Zeitschritten k und k+1 und anschließendes Erweitern der Trajektorien der Ausgangsgrößen bis eine oder mehrere der Trajektorien nicht mehr zulässig sind, beschreibt. Beispielsweise kann dies beim Zeitschritt k+j (z. B. k+5 bei der Schaltsequenz 20) passieren. Das dritte Schaltereignis erfolgt dann zu diesem Zeitpunkt und wird von einem weiteren Erweiterungsschritt gefolgt.

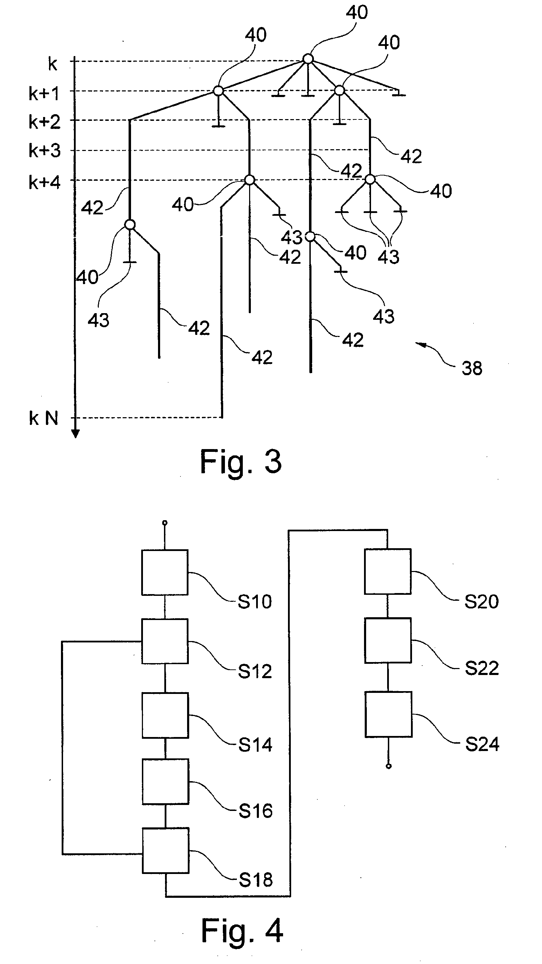

Fig. 3 zeigt ein Beispiel eines Suchbaumes 38, der mithilfe eines iterativen MPDTC-Algorithmus mit dem erweiterten Schalthorizont "SSESE" erzeugt wurde. Der Suchbaum 38 weist Schaltknoten 40 (entsprechend den Schaltelementen des Horizonts), an denen eine Verzweigung auf alle zulässigen Schaltübergänge durchgeführt wird, und Pausenknoten 42 (entsprechend den Pausenelementen des Horizonts), die die Trajektorien der Ausgangsgrößen erweitern, bis eine Grenze getroffen wird, auf.

Der Suchbaum 38 weist auch verworfene Knoten 43 auf, die zu Schaltsequenzen gehören, die verworfen wurden, und die durch ein umgekehrtes T bezeichnet sind. Die diskrete Zeitachse ist auf der linken Seite gezeigt und erstreckt sich von k bis k+N. Wobei N die Länge des Horizonts der längsten Schaltsequenz ist.

Die Fig. 4 zeigt ein Flussdiagramm für einen iterativen MPDTC-Algorithmus, der beispielsweise den Suchbaum 38 erzeugt haben kann. Zum Zeitschritt k berechnet der MPDTC-Algorithmus die Schaltsequenz $U = [u(k), u(k+1), ... , u(k+N-1)]$ gemäß dem folgenden Ablauf:

Initialisiere in einem Schritt S10 den Wurzelknoten des Baumes mit dem gegenwärtigen Zustandsvektor des Antriebes $x(k)$, der vorhergehenden Schaltposition $u(k-1)$ und dem (verallgemeinerten) Schalthorizont. Lege den Wurzelknoten auf einen Stapelspeicher.

Der Zustandsvektor $x(k)$ kann bpsw. die Stator- und Rotorstromkomponenten der Maschine oder die Stator- und Rotorflußkomponenten der Maschine oder eine Kombinationen dieser enthalten. Darüber hinaus kann der Zustandsvekttor $x(k)$ Zustände des Umrichters enthalten, wie bspw. das Spannungspotential an dem oder den Zwischenkreismittelpunkten.

Nimm im Schritt S12 den obersten Knoten mit einem nicht leeren Schalthorizont vom Stapel.

Lese im Schritt S14 das erste Element des Schalthorizonts. Für "S" verzweige in alle zulässigen Schaltübergänge. Zulässige Schaltübergänge sind dabei Schaltübergänge die für die Topologie des Umrichters zulässig sind, z. B. die den Umrichter nicht beschädigen oder zu stark belasten können. Zulässige Schaltübergänge können in einer Nachschlagetabelle gespeichert werden und "Offline" berechnet werden.

Für "E" erweitere im Schritt S 14 die Trajektorien der Ausgangsgrößen entweder durch Extrapolation, Interpolation und/oder unter Verwendung des internen Antriebsmodells. Dabei kann der Zustandsvektor $x(k)$ verwendet und mit den berechneten Ausgangsgrößen aktualisiert werden.

Verwerfe in Schritt S16 die Schaltsequenzen, die keine Kandidaten sind und behalte nur die Schaltsequenzen, die Kandidaten sind. Beispielsweise sind Schaltsequenzen keine Kandidaten, wenn nach einem Schaltübergang eine oder mehrere Ausgangsgrößen ihre Grenzen verlassen haben.

Lege in Schritt S18 die Kandidaten-Schaltsequenzen auf den Stapel und gehe zu Schritt S12, falls noch Knoten auf dem Stapel liegen. Falls es keine Knoten auf dem Stapel mehr gibt, die nicht leere Schalthorizonte umfassen, stoppe die Berechnung. Das Ergebnis dieser Berechnungen sind die Kandidatenschaltsequenzen $U_i(k)=[u_i(k),...,u_i(k+n_i-1)]$ mit variabler Länge, wobei i aus I ist und I eine Indexmenge ist.

Berechne in Schritt S20 für jede Kandidatenschaltsequenz i in I den zugehörigen Gütewert. Wenn die Schaltfrequenz minimiert werden soll, betrachte beispielsweise $c_i = s_i/n_i$, das die durchschnittliche Schaltfrequenz annähert, wobei $s_i=\sum_{j=k}^{k+n_i-1}||u_i(j)-u_i(j-1)||_1$ die Gesamtzahl der Schaltübergänge in der Schaltsequenz $U_i(k)$ ist und $n_i$ die entsprechende Schaltsequenzlänge ist.

Wenn in Schritt S20 der Gütewert mittels der Schaltverluste berechnet wird, wird die Gütefunktion $c_i=E_i/n_i$ verwendet, wobei $E_i$ die Schaltverluste sind. Zur Berechnung der Schaltverluste kann es sein, dass die Phasenströme berechnet werden müssen, die lineare Kombinationen der Flusskomponenten sind.

Wähle in Schritt S22 die optimale Schaltsequenz $U^*=U_i(k)$ mit dem minimalen Gütewert, wobei $i=\arg\min c_i$.

Wende im Schritt S24 den ersten Schaltübergang $u(k)=u^*$ der optimalen Schaltsequenz $U^*$ auf die Schaltelemente des Umrichters an und führe die eben beschriebene Verfahren bei dem nächsten Zeitschritt k+1 (d. h. im nächsten Steuerungszyklus) aus.

Der Algorithmus ist so konstruiert, dass jede Kandidatenschaltsequenz Ausgangsgrößentrajektorien ergibt, die zulässig sind. Dies versucht sicherzustellen, dass die Grenzen der Ausgangsgrößen zu jeder Zeit während eines stationären Betriebs respektiert werden. Darüber hinaus wird der Algorithmus iterativ ausgeführt, das heißt, anstatt zuerst die Schaltsequenzen aufzulisten und dann die zugehörigen Ausgangsgrößentrajektorien zu berechnen, werden die Schaltsequenzen schrittweise durch Verzweigen an den zulässigen Schaltübergängen 40 aufgebaut. Ein Vorteil hiervon ist, dass der Schalthorizont leicht erweitert werden kann, so dass eine Mehrzahl von Schaltübergängen 40 und eine Mehrzahl von Pausenknoten 42 berücksichtigt werden können. Darüber hinaus können Baumsuchtechniken angewendet werden, um die Rechenlast zu reduzieren.

In Bezug auf die Fig. 3 startet der Algorithmus beim Wurzelknoten und durchläuft den Suchbaum 38 mit Knoten 40, die wiederum einen Wurzelknoten für einen Teilbaum darstellen, in dem jeder Knoten einen zulässigen Schaltübergang darstellt und Pausenknoten 42, die für Erweiterungsschritte stehen und nur einen Kindknoten aufweisen. Die Tiefe des Baums 38 ist die Anzahl der verfügbaren Schaltübergänge plus der Anzahl der Pausenschritte pro Pausenknoten 42 innerhalb des Schalthorizonts. Der Algorithmus listet alle zulässigen Schaltsequenzen auf, die Kandidatenschaltsequenzen sind und berechnet ihre entsprechenden Ausgangsgrößentrajektorien und ihre Gütewerte. Damit werden alle Knoten in dem Suchbaum 40 besucht, die zu Kandidatenschaltsequenzen gehören.

Der eben beschriebene Algorithmus kann modifiziert werden, um die Recheneffizienz zu erhöhen, so dass längere Schalthorizonte auf heutzutage erhältlicher Hardware berechnet werden können. Dies kann beispielsweise durch die folgenden Techniken erreicht werden:

- Schnelle und genaue Verfahren, um die Drehmoment-, Statorfluss- und (Zwischenkreis-)-Mittelpunktpotentialtrajektorien für eine gegebene Schaltzustandskombination zu erweitern, bis eine der Trajektorien eine zugeordnete Hysteresegrenze (oder eine allgemeine vordefinierte Grenze) trifft. Das Ziel ist dabei, die durchschnittliche Rechenzeit zu reduzieren.

- Maßgeschneiderte Optimierungstechniken, um die Anzahl der im Suchbaum besuchten Knoten zu reduzieren. Das Ziel hierbei ist, die durchschnittliche Rechenzeit zu reduzieren.

- Suboptimales MPDTC, in der die maximale Anzahl von Iterationsschritten (oder die Zeit) begrenzt wird, es aber sichergestellt ist, dass eine zulässige Lösung (Schaltübergang) gefunden wird, die allerdings suboptimal sein kann. Dieses Konzept grenzt die Maximalrechenzeit ein, was vor allem für eine Implementierung des Algorithmus wichtig sein kann.

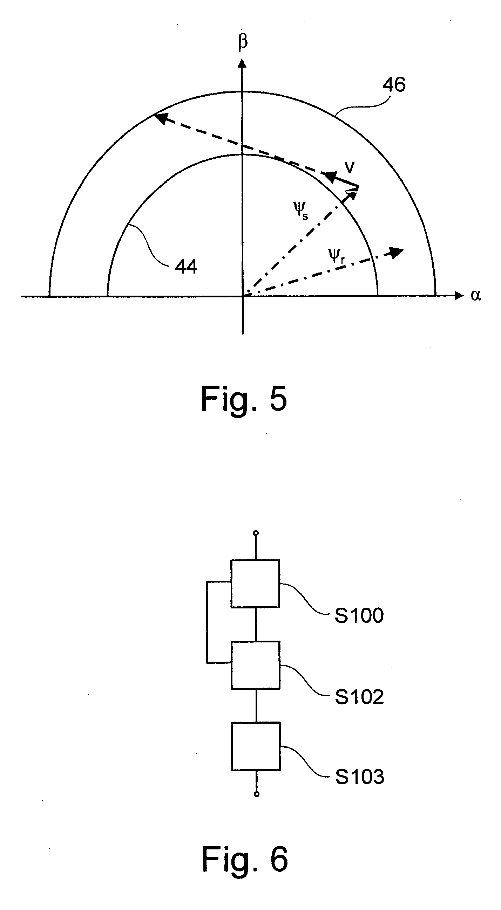

In Bezug auf die Figuren 5 und 6 wird nun angegeben, wie im Schritt S14 die Trajektorien von Ausgangsgrößen bzw. der Zeitpunkt, wann eine Trajektorie ein Grenze schneidet, durch Interpolation, Extrapolation oder sonstigen Näherungen bestimmt werden können.

Anstatt von eventuell ungenauen Extrapolationen und viel Rechenzeit benötigenden Simulationen, die ein Modell des Antriebs verwenden, kann die Anzahl der Zeitschritte, für die eine gegebene Schaltzustandskombination angewendet werden kann, bis eine der Ausgangsgrößen (Drehmoment, Statorfluss und Mittelpunktpotenzial(e)) eine Grenze trifft, analytisch vorhergesagt werden, wobei einfache Optimierungsverfahren zum Finden von Nullstellen verwendet werden können.

Fig. 5 zeigt einen Statorflussvektor $\psi_s$ und einen Rotorflussvektor $\psi_r$ in der $\alpha/\beta$-Ebene. Der Statorflussvektor $\psi_s$ wird durch einen Spannungsvektor v bewegt, der eine Funktion der Schaltzustandskombination u ist Der Statorflussvektor $\psi_s$ soll dabei innerhalb einer inneren Hysteresegrenze 44 und einer äußeren Hysteresegrenze 46 verbleiben.

Unter Vernachlässigung des Statorwiderstandes kann eine Statorflusstrajektorie, die zum Zeitpunkt 0 startet, durch eine einfache Beziehung der Form

$$\psi_s(t) = \psi_s(0) + tv$$

angenähert werden, wobei der Statorflussvektor $\psi_s$ in $\alpha/\beta$ gegeben ist, v der Spannungsvektor in $\alpha/\beta$ ist, t die kontinuierliche Zeit ist und Skalierungsfaktoren weggelassen wurden.

Das Quadrieren dieser Beziehung und ihr Gleichsetzen mit der inneren Hysteresegrenze 44 (dem Radius des inneren Kreises) führt zu einem Polynom zweiter Ordnung in der Zeit t. Abhängig von der Position des Statorflussvektors $\psi_s$ in Bezug auf die Hysteresegrenzen 44, 46 und der Richtung des Spannungsvektors v hat dieses Polynom keine, eine oder zwei Lösungen, die leicht berechnet werden können. Das gleiche gilt für eine analoge Beziehung für die Schnittpunkte mit der äußeren Hysteresegrenze 46, die entweder keine, oder zwei Lösungen zulässt.

Die Zeit t, nach der der Statorfluss $\psi_s$ eine Hysteresegrenze 44, 46 schneidet, wird durch die kleinste nicht-negative Zeit t gegeben, die wie oben beschrieben berechnet wird. Aus dieser Zeit kann die diskrete Zeiteinheit bzw. der Zeitschritt k ermittelt werden, der der Zeit t am nächsten liegt.

Auch der eben vernachlässigte Statorflusswiderstand kann für die eben beschriebene Berechnung auf verschiedene Art und Weise berücksichtigt werden:

- Durch Drehen des Spannungsvektors v um einen entsprechenden Winkel in Richtung des Ursprungs der $\alpha/\beta$-Ebene.

- Durch Verwenden der Statorflussgleichung des Maschinenmodells. Wenn zum Zeitpunkt 0 begonnen wird kann im Speziellen der Statorfluss $\psi_s$ nach einem kurzen Zeitintervall für den gegebenen Spannungsvektor v in $\alpha/\beta$ unter Verwendung des Maschinenmodells berechnet werden (nur die ersten zwei Gleichungen werden dazu benötigt). Darauf basierend kann die Länge und die Orientierung des Spannungsvektors v korrigiert werden, um so dem Statorwiderstand Rechnung zu tragen.

Diese Korrekturen können für alle Spannungsvektoren v und für alle Drehmoment- und Geschwindigkeitseinstellungen vor dem Ausführen des Algorithmus beispielsweise "Offline" berechnet werden. Diese Informationen können beispielsweise in einer Nachschlagetabelle gespeichert werden, auf die der Algorithmus zugreifen kann.

Auch die Trajektorie des Drehmoments bzw. deren Schnitt mit ihren Grenzen kann auf diese Weise ermittelt werden. Das Drehmoment ist das Kreuzprodukt zwischen dem Statorfluss $\psi_s$ und dem Rotorfluss $\psi_r$. Unter der Annahme, dass innerhalb des Vorhersagehorizonts die Länge des Rotorflussvektors $\psi_s$ konstant ist und dass die Drehung des Rotorflussvektors $\psi_s$ mit einer konstanten Geschwindigkeit geschieht, kann die eben beschriebene Statorflussentwicklung in die Drehmomentgleichung eingesetzt werden. Eine Vereinfachung der Gleichung führt zu einer Drehmomententwicklung als eine Funktion der Flusskomponenten zum Zeitpunkt 0 und der Terme $t \sin(w_r t)$ und $t \cos(w_r t)$, wobei $W_r$ die Rotationsgeschwindigkeit des Rotorflusses $\psi_s$ ist.

Das Gleichsetzen der Drehmomentgleichung mit der unteren und der oberen Drehmomentgrenze und Ermitteln der minimalen nicht negativen Zeit ergibt die Zeit, nach der die erste Grenze berührt bzw. geschnitten wird. Die Drehmomentgleichung kann auf verschiedene Wege gelöst werden. Beispielsweise können die eben beschriebenen Berechnungen analytisch durchgeführt werden.

Eine andere Möglichkeit, die Drehmomentgleichung zu lösen, besteht darin, die Terme $t \sin(w_r t)$ und $t \cos(w_r t)$ durch eine Taylorreihe um den Zeitpunkt $t=0$ oder $t>0$ zu approximieren. Darüber hinaus kann über t iteriert werden oder t basierend auf bereits vorhandenen Informationen, wo die nächste Berührung einer Grenze erwartet wird, eingestellt werden.

Außerdem ist es möglich, die Terme $t \sin(w_r t)$ und $t \cos(w_r t)$ durch eine stückweise polynomiale Funktion anzunähern und die Drehmomentgleichung in jedem Näherungsintervall zu lösen.

Eine andere Möglichkeit, die Drehmomentgleichung zu lösen, besteht darin, einen Algorithmus zum Ermitteln von Nullstellen zu verwenden, beispielsweise das Newton-Verfahren, das Sekanten-Verfahren und/oder das Regula-Falsi-Verfahren. Dieser Algorithmus kann abgebrochen werden, sobald der Zeitpunkt t ermittelt wurde, bei dem die Statorflusstrajektorie eine ihrer Grenzen schneidet.

In Bezug auf die Figur 6 wird dieser Algorithmus beschrieben:

Finde in Schritt S100 das nächste Drehmomentmaximum oder Minimum für t>0 unter Verwendung eines Algorithmus zum Ermitteln von Nullstellen durch Gleichsetzen der Ableitung mit 0.

Entscheide in Schritt S102, ob das Maximum oder Minimum innerhalb der Grenzen für das Drehmoment liegt. Ist dies der Fall, fahre mit Schritt S100 fort. Ist dies nicht der Fall fahre mit Schritt S103 fort.

Bestimme in Schritt S103 die Grenze, die geschnitten wird, d. h. die obere oder untere Drehmomentgrenze, und berechne die Zeit, zu der die Grenze berührt wird, unter Verwendung eines Algorithmus zum Ermitteln von Nullstellen.

Der Zeitpunkt, an dem das Mittelpunktpotenzial eine seiner Grenzen berührt, kann mittels jedem der eben beschriebenen Wege berechnet werden. Dies umfasst eine Extrapolation oder eine analytische Lösung ähnlich zu der oben beschriebenen Lösung der Drehmomentgleichung.

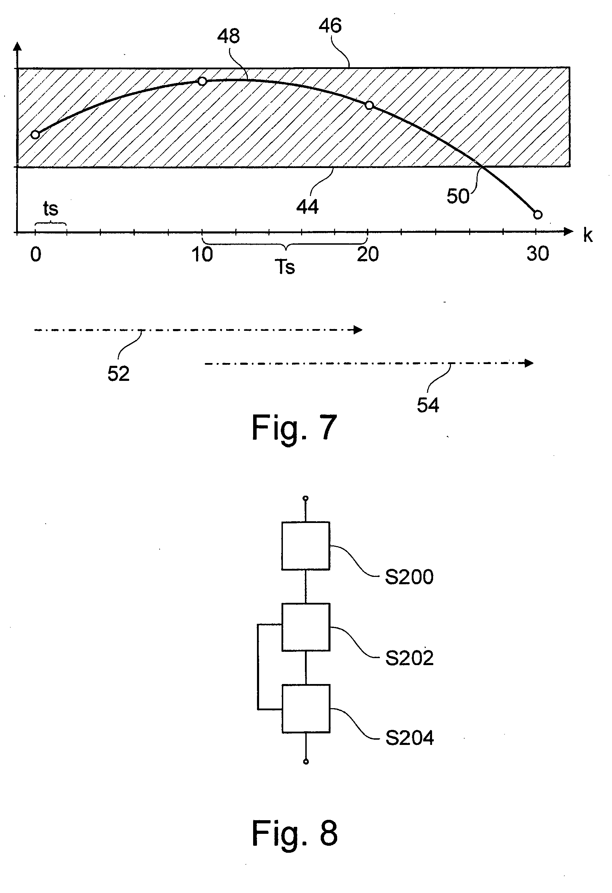

Im Gegensatz zu dem eben beschriebenen Verfahren zum analytischen Bestimmen von Trajektorien von Ausgangsgrößen und den Zeitpunkten, wann diese Trajektorien die obere oder untere Grenze schneiden, wird im Folgenden ein Verfahren vorgestellt, das auf dem (eventuell mathematischen) Antriebsmodell unter Verwendung eines groben Abtastintervalls und quadratischer Interpolation beruht. Dieser Ansatz wird in Bezug auf die Figuren 7 und 8 beschrieben.

Fig. 7 zeigt eine Trajektorie 48 einer Ausgangsgröße, die über der Zeitachse k aufgetragen ist und für die Werte zu den groben Zeitschritten Ts=d*ts berechnet wurden. ts ist dabei das Abtastintervall der Steuerung, das heißt das kürzeste Zeitintervall bzw. der Zeitschritt, das die Steuerung abtasten kann, beispielsweise $25\mu s$ oder auch das Intervall eines Steuerungszyklus. Ein grobes Abtastintervall Ts=d*ts kann gewählt werden, indem d beispielsweise auf 10 gesetzt wird. Ein grobes Abtastintervall ist damit ein Vielfaches des Abtastintervalls der Steuerung.

Wie aus der Figur zu erkennen ist verläuft die Trajektorie 48 zwischen k=0 und k=27 innerhalb der untere und oberen Hysteresegrenzen 44, 46 und schneidet die untere Hystereresegrenze ungefähr bei k=27.

Der im Folgende in Bezug auf die Figur 8 beschriebene Algorithmus zum Bestimmen eines Schnittpunkts 50 der Trajektorie 48 mit einer der Grenzen 44, 46 beruht darauf, dass das in der Steuerung gespeicherte zeitdiskrete Antriebsmodell als Diskretisierungsschritt das grobe Abtastintervall Ts verwendet und nicht das Abtastintervall der Steuerung.

Starte in Schritt S200 bei k=0 und berechne bzw. simulieren die Ausgangsgröße bei k=d und k=2d unter Verwendung des Antriebsmodells.

Leite in Schritt S202 für jede Ausgangsgröße eine quadratische Näherung der jeweiligen Ausgangsgrößentrajektorie 48 basierend auf den Punkten bei k=0, d und 2d ab. Basierend auf der Krümmung der quadratischen Näherung und darauf, ob die Punkte bei k=0, d und 2d innerhalb, oberhalb oder unterhalb der Hysteresegrenzen 44, 46 liegen, identifiziere, welche Grenze ein Kandidat dafür ist, um von der Ausgangsgrößentrajektorie geschnitten zu werden.

Berechne in Schritt S204 den Schnittpunkt der quadratischen Näherung mit der als Kandidat identifizierten Grenze. Falls es einen Schnittpunkt gibt, berechne den Zeitpunkt des Schnitts analytisch. Wenn der Zeitpunkt zwischen k=0 und k=2d ist, stoppe den Algorithmus. Nimm die bestimmte minimale Zeit aller Ausgangsgrößen, für die die Berechnung durchgeführt wurde, als den zu ermittelnden Zeitpunkt. Wenn keine der Ausgangsgrößen eine Grenze innerhalb k=0 und k=2d schneidet, bewege dich um ein grobes Abtastintervall Ts in die Zukunft und berechne die Ausgangsgrößen beim Zeitschritt k=3d. Wiederhole den Schritt S202, aber um d verschoben.

Ausgehend aus der in Fig. 7 gezeigten Situation wird der Algorithmus folgendermaßen vorgehen: In einem ersten Schritt, in dem das Intervall 52 basierend auf den Punkten k=1, d und 2d betrachtet wird, wird der Schnittpunkt mit der oberen Hysteresegrenze untersucht, aber kein Schnittpunkt gefunden. In einem zweiten Schritt, wenn das Intervall 54 basierend auf den Punkten k=d, 2d und 3d betrachtet wird, wird der Schnittpunkt 50 mit der unteren Hysteresegrenze 44 bestimmt und der Zeitpunkt k=27 ermittelt.

d kann so gewählt werden, dass die Länge eines Intervalls (d.h. 2d) im Bereich der durchschnittlichen Anzahl von Erweiterungszeitschritten liegt, d.h. der durchscnittlichen Länge von Schaltpausen. Diese Information kann auch durch Simulationen "offline" berechnet werden und in einer Nachschlagetabelle gespeichert werden.

Statt die Ausgangsgrößen bei den Zeitschritten 0, d und 2d zu bestimmen und eine quadratische Interpolation zu verwenden, können die Ausgangsgrößen zu den Zeitpunkten 0 und 2d und deren Ableitungen bei den Zeitschritten 0 und 2d berechnet werden und für eine quadratische Interpolation benutzt werden.

Zusätzlich oder alternativ können auch lineare oder kubische Interpolationen basierend auf Werten von Ausgangsgrößen bei einer geeigneten Anzahl von Zeitschritten verwendet werden. Diese Zeitschritte müssen nicht gleichmäßig verteilt bzw. beabstandet sein. Insbesondere kann ein Zeitschritt dort angeordnet werden, wo erwartet wird, dass die Trajektorie eine Grenze schneidet.

Anstatt alle zulässigen Schaltsequenzen bzw. Kandidatenschaltsequenzen zu bestimmen und zu sortieren (bzw. zu priorisieren), kann auch die Anzahl der Schaltsequenzen, die untersucht werden sollen, begrenzt oder reduziert werden, um die durchschnittliche Rechenzeit zu reduzieren.

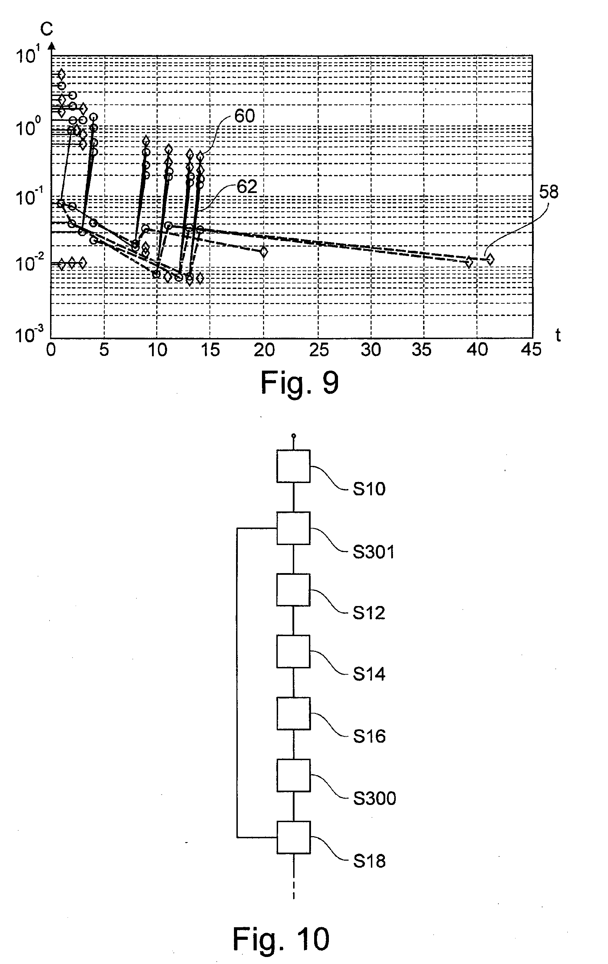

Fig. 9 zeigt die Entwicklung von Gütewerten über die variable Länge des verallgemeinerten Schalthorizonts "eSSESE". Im Diagramm der Fig. 9 ist nach rechts die Zeit in Zeitschritten aufgetragen und nach oben die Güte. Die Entwicklung ist während der Durchführung eines sogenannten "Verzweigungs- und Begrenzen"-Suchalgorithmus entstanden, der später noch genauer beschrieben wird. Die vollständigen Schaltsequenzen 58 wurden vollständig untersucht, die unvollständigen Schaltsequenzen 60 wurden nicht vollständig untersucht und wurden aufgegeben. Die Schaltsequenzen 62 wurden noch nicht vollständig untersucht. Wie aus der Figur hervorgeht, hat die derzeit optimale Schaltsequenz in diesem Fall eine Länge von 39 Zeitschritten und einen Gütewert von ungefähr 0,01.

Aus der Figur kann abgeleitet werden, dass die Gütewerte nicht monoton steigen, wenn die Schaltsequenzen erweitert werden. Trotzdem kann unter Zuhilfenahme der folgenden Berechnungen eine Abschätzung der Güte von unvollständigen Schaltsequenzen durchgeführt werden.

Eine vollständige Schaltsequenz ist dabei eine Schaltsequenz, die alle Elemente des verallgemeinerten Schalthorizonts aufweist. Im Gegensatz dazu ist eine unvollständige Schaltsequenz eine Schaltsequenz, die erst durch Anhängen von Elementen zu einer vollständigen Schaltsequenz ausgebildet wird. Das heißt eine unvollständige Schaltsequenz weist in der Regel weniger Elemente als der verallgemeinerte Schalthorizont auf.

Der Gütewert c einer vollständigen Schaltsequenz kann dabei folgendermaßen berechnet werden: Der einer Schaltsequenz zugeordnete Gütewert ist die Summe der Schaltverluste aller Schaltübergänge geteilt durch die Gesamtlänge der Schaltsequenz n, das heißt $c=sum(E_{loss})/n$. Da ein Schalthorizont Schaltübergänge und Pausenelemente enthalten kann, die von variabler Dauer sein können, kann n von variabler Länge sein.

Der gegenwärtig minimale Gütewert c* ist der kleinste Gütewert c, der innerhalb eines Ablaufs des Algorithmus für eine vollständige Schaltsequenz gefunden wurde.

Die untere Grenze der Gütewerte $c_{lb}$ der nicht vollständigen Schaltsequenzen kann folgendermaßen berechnet werden: Da der Gütewert c typischerweise die Summe der Schaltverluste über alle Schaltübergänge der Schaltsequenz geteilt durch die Gesamtlänge der Schaltsequenz ist, müssen die Gütewerte mit zunehmender Länge einer Schaltsequenz nicht notwendigerweise monoton ansteigen. Um sogenannte Verzweigungs- und Begrenzungstechniken anwenden zu können, wird eine untere Grenze für die Gütewerte $c_{lb}$ eingeführt, die auch für unvollständige Schaltsequenzen gilt: $c_{lb}=sum(E_{loss})/N_{max}$, wobei $N_{max}$ eine obere Grenze für die maximale Länge des Schaltsequenz ist. Dann gilt, dass $c \geq c_{lb}$ ist.

Es ist auch möglich, dass die maximal erwartete Länge der Schaltsequenzen $N_{max}$ während des Ablaufs des Algorithmus aktualisiert wird. Der Suchalgorithmus ist effizienter, wenn $N_{max}$ eine enge obere Grenze der maximale Schaltsequenzlänge ist.

Während der Baumsuche kann $N_{max}$ auf viele Arten und Weisen aktualisiert werden. Im Folgenden werden einige Ansätze dafür genannt, die auch kombiniert werden können:

$N_{max}$ kann durch Offline-Simulationen, für jeden Betriebspunkt und für jeden vorgegebenen Schalthorizont bestimmt werden und in einer Nachschlagetabelle abgelegt werden.

$N_{max}$ kann aus dem vorhergehenden Steuerungszyklus in den nächsten Steuerungszyklus übernommen werden. Während der Baumsuche kann $N_{max}$ erhöht werden, wenn eine Schaltsequenz gefunden wird, die einen längeren Schalthorizont aufweist. Dabei ist es auch möglich, dass $N_{max}$ aus dem vorhergehenden Steuerungszyklus um einen festen Wert skaliert wird, beispielsweise um 0,9.

Auch ist es möglich, dass der Startwert von $N_{max}$ für einen Steuerungszyklus das Maximum, oder der Durchschnitt von $N_{max}$ über eine bestimmte Anzahl vorhergehender Steuerungszyklen ist.

Insgesamt kann es notwendig sein, dass während der Baumsuche zuvor verworfene (unvollständige) Schaltsequenzen erneut betrachtet werden müssen, falls $N_{max}$ erhöht wird und dass eventuell $c_{lb}$ aktualisiert werden muss.

Darüber hinaus können Relaxierungen und Näherungen verwendet werden, um eine untere Grenze $c_{lb}$ zu berechnen.

In der Fig. 10 ist ein Ausschnitt aus einem Algorithmus dargestellt, der dem Algorithmus aus der Fig. 4 ähnelt. Jedoch wurde der Schritt S20 aus der Fig. 10 durch den Schritt S300 ersetzt und der Schritt S301 eingefügt, eine Verzweigung von Schritt S18 führt nicht mehr zu Schritt S12 sondern zu Schritt S301. Die Reihenfolge der Schritte S300, S301, S12, S14 und S16 kann dabei auch anders sein als in der Fig. 10 dargestellt. Im Schritt S300 werden Schaltsequenzen während der Rekursion bzw. Iteration verworfen. Im Schritt S301 werden nicht verworfene Schaltsequenzen sortiert und/oder priorisiert. Im Schritt S12 wird dann eine Schaltsequenz mit höchster Priorität ausgewählt. Grundsätzlich kann die Gütefunktion in Schritt S300 evaluiert und Schaltsequenzen dort verworfen werden, wenn für diese c größer als $c_{lb}$ ist. Es ist auch möglich, dass die Priorisierung und Sortierung, d. h. welche Schaltsequenz betrachtet werden soll, im Ablauf vor Schritt S12 gemacht wird.

Der Algorithmus kann auf verschiedene Art und Weise modifiziert werden:

Maßgeschneiderter "Verzweigungs und Begrenzungs"-Algorithmus: Berechne die Schaltsequenzen und die zugehörigen Ausgangsgrößentrajektorien (S14) und Gütewerte (S300) iterativ, wenn der Baum vom Wurzelknoten zu den Blättern durchwandert wird. Bei jedem Iterationsschritt (S300) berechne eine untere Grenze $c_{lb}$ für den Gütewert der gegenwärtigen (eventuell unvollständigen) Schaltsequenz. Wenn die untere Grenze $c_{lb}$ die minimalen Güte c* (der besten vollständigen Schaltsequenz, die bis jetzt ermittelt wurde) übersteigt, werden unvollständige Schaltsequenzen nicht betrachtet und verworfen.

"Zuerst in die Tiefe Suche"-Algorithmus: Beginne mit der vielversprechendsten Schaltsequenz (beispielsweise, indem im Schritt S301 immer die unvollständige Schaltsequenz priorisiert wird, die die gleichen Schaltübergänge aufweist wie die vielversprechendste Schaltsequenz) und berechne die zugehörigen Ausgangsgrößentrajektorien und deren Gütewert. Das Ziel ist es, sofort am Beginn der Baumsuche eine (vollständige) Schaltsequenz zu finden, die der optimalen Schaltsequenz nahe kommt und einen entsprechend kleinen Gütewert aufweist.

"Warmstart"-Algorithmus: Die vielversprechendsten Schaltsequenzen können (zumindest teilweise) vor dem Ablauf des Algorithmus ermittelt werden, beispielsweise aus:

- der optimale Schaltsequenz des vorhergehenden Steuerungszyklus, die um einen Zeitschritt verschoben wurde,

- der optimale Schaltsequenz, die für einen vorhergehenden Optimierungsschritt bestimmt wurde, der mit einem kürzeren Schalthorizont durchgeführt wurde. (Da eine derartige Schaltsequenz nicht komplett ist, ermöglicht dies einen teilweisen "Warmstart" und eine Verzweigung von dem Ende der nicht kompletten Schaltsequenz aus wird benötigt, um eine komplette Schaltsequenz zu erhalten).

- Auch ist es möglich, die erste Schaltposition einer Schaltsequenz mittels der Methode der weiter unten beschriebenen geometrischen Analyse zu bestimmen.

Verzweigungsheuristiken-Algorithmen: In seiner Grundform verzweigt der Algorithmus über alle zulässigen Schaltübergänge und wählt dabei den obersten Knoten auf dem Stapelspeicher. Um die Anzahl der Iterationen weiter zu reduzieren, werden die vielversprechendsten Schaltübergänge (Knoten) zuerst untersucht und die Schaltübergänge dafür entsprechend sortiert. Eine Sortierung oder Priorisierung in Schritt S301 kann durch die Einführung von Verzweigungsheuristiken durchgeführt werden, die beispielsweise umfassen:

Die Priorisierung erfolgt anhand der Wahrscheinlichkeit, mit der eine Schaltsequenz zu einer zulässigen und/oder guten Schaltsequenz führt. Die Wahrscheinlichkeit kann für den zu untersuchenden Schaltübergang aus einer Nachschlagetabelle ermittelt werden, die zuvor "Offline" berechnet wurde, oder diese kann "online" bestimmt werden: Für jeden Betriebspunkt und jeden (Spannungsvektor)-Sektor in der $\alpha/\beta$-Ebene wird durch Simulation des stationären Betriebs die Wahr-

scheinlichkeit von jedem Schaltübergang (Spannungs-vektor) bestimmt. Um den Speicherbedarf zu reduzieren, wird das Problem in den Null-Sektor überführt und die Wahrscheinlichkeitsverteilung wird für den Null-Sektor bestimmt. Die Schaltpositionen bzw. Schaltsequenzen werden dann entsprechend der absteigenden Wahrscheinlichkeit sortiert und eine Verzweigung erfolgt zuerst für die Schaltsequenzen bzw. Schaltpositionen, die die höchste Wahrscheinlichkeit aufweisen. Die typische Breite eines Sektors beträgt 15, 30, 45 oder 60°. Mit anderen Worten wird das Problem unter Ausnutzung von Symmetrieeigenschaften des 3-Phasensystems in einen niedrigdimensionalen Raum abgebildet. Für diesen Raum kann "offline" durch Simulationen die Wahrscheinlichkeit berechnet werden, mit der jeder einzelne Schaltzustand bzw. Schaltübergang verwendet wird.

Alternativ oder zusätzlich hierzu können die Schaltübergänge und Schaltsequenzen auch basierend auf einer geometrischen Analyse sortiert werden. Schaltpositionen, die ein konstantes Drehmoment aufrecht erhalten, liegen auf einer Linie parallel zum Rotorfluss, während die Schaltpositionen, die die Größe des Statorflusses konstant halten, auf einer Linie senkrecht zum Statorfluss liegen. Basierend auf diesen Betrachtungen können diskrete Schaltpositionen bestimmt werden, die das Drehmoment erhöhen bzw. erniedrigen und/oder den Statorfluss erhöhen bzw. erniedrigen. Abhängig davon, ob das Drehmoment sich nahe bei der oberen bzw. der unteren Grenze befindet und damit vermindert bzw. erhöht werden muss, können diskrete Schaltpositionen, die diese Kriterien erfüllen, gewählt und priorisiert werden. Die gleiche Berechnung kann auch für den Statorfluss und die Mittelpunktpotenziale bzw. das Mittelpunktpotenzial erfolgen. Die Idee hierbei ist es, eine ideale Spannung zu berechnen, die ein konstantes Drehmoment und einen konstanten Fluss erzeugen würde. Diese ideale Spannung kann nur durch unendlich schnelles Schalten erreicht werden, also nur im Grenzwert. Die ideale Spannung kann man in ideale Schaltzustände übersetzen, die in der Regel nicht ganzzahlig, daher nicht schaltbar, sondern reell sind, wie beispielsweise [0.9; -0.8; 0.1]. Schaltbar ist beispielsweise allerdings nur [1; -1; 0]. Die ideale Spannung bzw. der ideale Schaltzustand bzw. Schaltübergang kann ein guter Startwert sein, in dessen Nachbarschaft, also beispielsweise [1; -1; 0] erfolgsversprechende Schaltzustände bzw. Schaltübergänge liegen. Darüber hinaus können basierend auf der idealen Spannung Schaltzustände bzw. Schaltübergänge bestimmt werden, die einen gewünschten Effekt auf den Umrichter und die Maschine haben, also beispielsweise das Drehmoment vergrößern.

Das eben Gesagte kann für sogenannte relaxierte Schaltpositionen bzw. Schaltübergänge, das heißt reelle Schaltzustände durchgeführt werden. Nach dem Bestimmen der gewünschten relaxierten Schaltpositionen können auch die diskreten Schaltpositionen in der Umgebung der relaxierten Schaltpositionen zuerst betrachtet werden.

Um Schaltsequenzen zu sortieren und/oder zu priorisieren (S301), kann auch derart vorgegangen werden, dass der Knoten mit den bis zum gegenwärtigen Zeitpunkt innerhalb des Steuerungszyklus besten Gütewert als nächstes untersucht wird (entweder c oder $C_{lb}$).

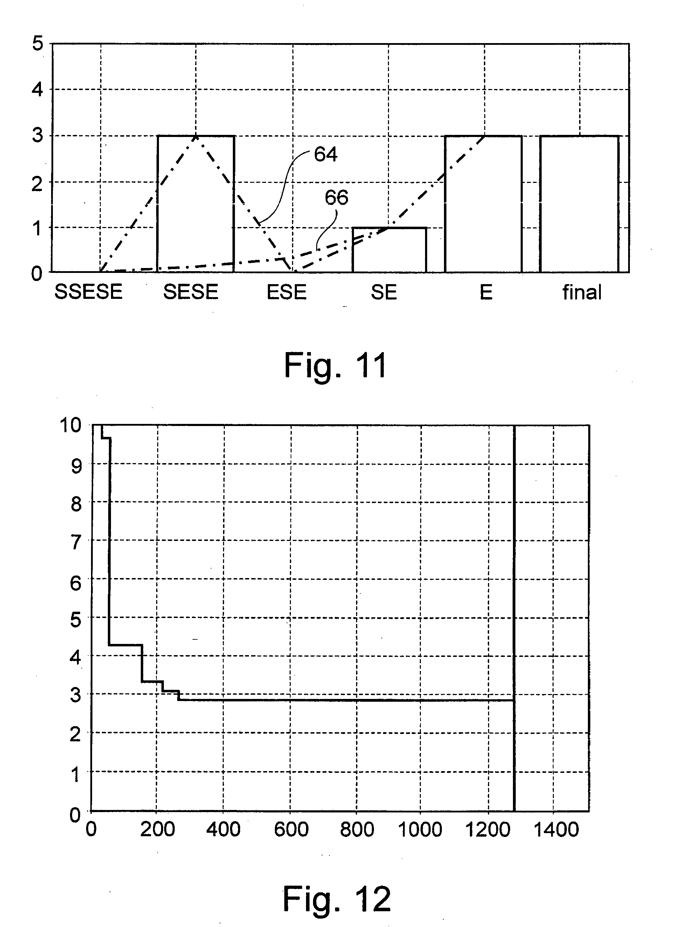

Eine weitere Möglichkeit zur Priorisierung von Schaltsequenzen in Schritt S301 wird in Bezug auf die Figuren 11 und 12 beschrieben.

Fig. 11 zeigt ein Histogramm mit der Anzahl der Knoten pro Niveau des Suchbaums für den verallgemeinerten Schalthorizont "eSSESE". In dem Histogramm sind nach oben die Anzahl der Knoten und nach rechts die Tiefe des Suchbaums bzw. die Niveaus dargestellt. Wie aus dem Diagramm ersichtlich ist, kann die Tiefe des Suchbaums auch mit den verbleibenden durchzuführenden Aktionen aus dem verallgemeinerten Schalthorizont (beispielsweise "ESE") bezeichnet werden.

Die Priorisierung der Knoten im Suchbaum und der Schaltsequenzen kann derart erfolgen, so dass das Histogramm in einer bestimmten Art und Weise geformt wird. Dies erlaubt es, die Verteilung von nicht untersuchten Knoten bzw. unvollständigen Schaltsequenzen im Suchbaum anzupassen. Anstatt immer den Knoten mit dem kleinsten Gütewert (der sich gewöhnlich auf einem oberen Niveau, d. h. links im Histogramm, des Suchbaums befindet), auszuwählen, kann es vorteilhaft sein, rasch vollständige Schaltsequenzen zu berechnen, um schnell untere optimale Gütewerte (gute Grenzen) zu gewinnen und daher den Fokus auch auf die unteren Niveaus des Suchbaums zu lenken.

In Bezug auf die Fig. 11 repräsentiert die Linie 66 dabei das gewünschte Histogramm, und die Linie 64 das gegenwärtige Histogramm, das durch teilweises Durchführen des Algorithmus entstanden ist. In diesem Beispiel wird ein Knoten des zweiten Niveaus (bei dem die Aktionen "SESE" noch durchgeführt werden müssen) ausgewählt. Insbesondere kann dabei der Knoten im zweiten Niveau mit dem kleinsten Gütewert genommen werden.

Dies kann durch die folgenden Modifikationen des Algoritmus aus der Fig. 10 erreicht werden:

Im Schritt S301 bestimme zusätzlich die Anzahl der Knoten für jedes Niveau des Suchbaums. Dies führt beispielsweise zum Histogramm der Fig. 11. Entscheide über die gewünschte Form des Histogramms, beispielsweise eine exponentielle Funktion der Tiefe des Suchbaums. Diese Form kann auch bereits vordefiniert sein.

Im Schritt S301 wähle das Niveau, das die gewünschte Histogrammform am meisten verletzt. Für dieses Niveau wähle beispielsweise die (unvollständige) Schaltsequenz mit dem geringsten Gütewert und priorisieren diese.

Ein großer Teil der im Vorstehenden beschriebenen Ausführungsformen tragen dazu bei, die durchschnittliche Rechenzeit zu vermindern. Es kann jedoch genauso wichtig sein, die maximale Rechenzeit zu begrenzen.

Dies kann dadurch erreicht werden, dass die maximale Anzahl von Rechenschritten bzw. die Rechenzeit begrenzt wird, dass suboptimale Lösungen des MPDTC-Problems zugelassen werden, wobei aber sichergestellt werden kann, dass immer eine gute (Kandidaten-)-Schaltsequenz gefunden wird.

Wie bereits beschrieben, führt eine Kandidatenschaltsequenz zu Trajektorien von Ausgangsgrößen, die zulässig sind, das heißt innerhalb bestimmter Grenzen liegen oder in die richtige Richtung zeigen.

Fig. 12 zeigt die Entwicklung von Gütewerten (hier basierend auf den Schaltverlusten) dargestellt über die Anzahl der Iterationen während einer Baumsuche. Im Diagramm sind nach rechts die Anzahl der Iterationen aufgetragen und nach oben die Schaltverluste in Kilowatt.

Aus dem Diagramm ist ersichtlich, dass der optimale Gütewert schnell gefunden wird. In diesem Fall nach etwa 25% der Gesamtanzahl der Iterationen. Die meisten Iterationen (hier 75%) werden lediglich dazu verwendet, um die Optimalität der Lösung zu bestätigen. Das optimale erste Element der Schaltsequenz, das heißt der nächste optimale Schaltübergang, wird sogar noch früher gefunden (innerhalb weniger als 25% der Gesamtzahl der Iterationen).

Daher kann es sinnvoll sein, ein suboptimales MPDTC-Verfahren durchzuführen. Um einen suboptimalen MPDTC-Algorithmus bzw. -Verfahren durchzuführen, können die folgenden Modifikationen an den vorhergehend beschriebenen MPDTC-Algorithmen durchgeführt werden.

Im Schritt S18 aus den Figuren 4 und 10 kann eine alternative oder zusätzliche Abbruchbedingung für das Beenden der Rekursion eingesetzt werden:

- Eine obere Grenze für die Anzahl von Schaltsequenzen bzw. Knoten, die untersucht werden, und/oder eine obere Grenze für die zur Verfügung gestellte Rechenzeit wird eingeführt. Der Algorithmus wird gestoppt, wenn diese Anzahl oder diese Zeit überschritten wird. Die bis zum Abbruch ermittelte optimale Schaltsequenz wird als (suboptimale) Lösung verwendet.

- Alternativ dazu kann der Optimierungsalgorithmus so lange durchlaufen werden, bis ein Interrupt eintritt, der die Baumsuche stoppt. Ein Interrupt kann die Baumsuche jederzeit unterbrechen. Dies erlaubt es, Prozessorleerlaufzeit zu vermeiden, und stattdessen diese Zeit mit dem Verbessern der gegenwärtig optimalen Lösung zu verwenden.

- Es ist auch möglich, den Algorithmus zu stoppen, wenn eine Garantie für die Nähe zur Optimalität erreicht ist. Dabei wird ein akzeptabler Optimalitätsabstand angegeben, der beispielsweise 2% betragen kann in Bezug auf die Gütefunktion. Die Baumsuche wird dann gestoppt, wenn eine komplette Schaltsequenz bestimmt wurde, die sich innerhalb von 2% der besten $c_{lb}$ befindet, wobei $c_{lb}$ die untere Schranke auf die Güte unvollständiger Schaltsequenzen darstellt.

Darüber hinaus kann zusätzlich sichergestellt werden, dass immer eine gute Schaltsequenz gefunden wird, die zulässig ist, deren erster Schaltzustand bzw. Schaltübergang zulässig ist, die ein stabiles Verhalten des Antriebs sicherstellt (d. h. deren Ausgangsgrößentrajektorien sich innerhalb der Grenzen bewegen oder auf diese zu) und/oder die eine gute Performance der Maschine und des Umrichters sicherstellt (die vorhergesagte Güte ist klein). Dies kann auf verschiedene Art und Weisen erreicht werden:

- Ein "Warmstart"-Algorithmus kombiniert mit einem "Zuerst in die Tiefe" Suchalgorithmus, wie beispielsweise obenstehend beschrieben, erfüllt die Voraussetzungen, schnell eine nahe der optimalen Schaltsequenz liegende Lösung (Schaltsequenz) über dem gesamten Schalthorizont zu finden.

- Es ist auch möglich, während eines Steuerzyklus den Algorithmus mit zwei unterschiedlich langen Schalthorizonten durchzuführen. In einer Vorstufe wird der Schaltalgorithmus mit einem kurzen Schalthorizont durchgeführt und eine optimale bzw. suboptimale Schaltsequenz für diesen kurzen Schalthorizont berechnet. Diese Schaltsequenz kann dann verwendet werden, um beispielsweise mittels des "Warmstart"-Algorithmus die Hauptstufe des Optimierungsverfahren durchzuführen.

Darüber hinaus kann, wie bereits beschrieben, der Suchraum durch Entfernen von nicht vielversprechenden Schaltübergängen (Knoten) aus dem Suchbaum reduziert werden. Dies kann beispielsweise basierend auf einer geometrischen Analyse wie vorstehend beschrieben, erfolgen.

Es ist zu verstehen, dass die obenstehend beschriebenen verschiedenen Ausführungsformen von Verfahren und Algorithmen miteinander kombiniert werden können, auch wenn dies explizit nicht erwähnt wird.

Die Verfahren und Algorithmen können als programmierte Software-Module implementiert sein. Es ist jedoch nicht ausgeschlossen, dass die Verfahren und Algorithmen zumindest teilweise mittels Hardware abgebildet sind.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

LISTE DER BEZUGSZEICHEN

| 1 | rotierende elektrische Maschine |
|---|---|
| 2 | Umrichterschaltung zur Schaltung von drei Spannungsniveaus |
| 3 | Gleichspannungskreis |
| 4 | Teilumrichtersystem |
| 5, 6, 7 | erste, zweite und dritte Schaltgruppe, Schaltelement |
| 9 | Leistungshalbleiter |
| 10 | Steuerung |
| 12 | Steuerleitung |
| 14 | Messsignalleitung |
| 16 | Prozessor |
| 20, 22, 24 | Kandidatenschaltsequenzen |
| 26, 28, 30 | Drehmoment-Trajektorien |
| 32, 34, 36 | Statorfluss-Trajektorien |
| 38 | Suchbaum |
| 40 | Schaltknoten |
| 42 | Pausenknoten |
| 43 | verworfener Knoten |
| $\psi_s$ | Statorflussvektor |
| $\psi_r$ | Rotorflussvektor |
| v | Spannungsvektor |
| 44 | innere/untere Hysteresgrenze |
| 46 | äußere/obere Hysteresgrenze |
| 48 | Trajektorie |
| ts | kleinstes Abtastintervall |
| Ts | grobes Abtastintervall |
| 50 | Schnittpunkt |
| 52, 54 | Intervall |
| 58, 60, 62 | Gütewerte von Schaltsequenzen |
| 64, 66 | Anzahl zu untersuchender bzw. untersuchter Knoten |

**Patentansprüche**

1. Verfahren zum Betreiben einer rotierenden elektrischen Maschine (1),
wobei die rotierende elektrische Maschine von einem Umrichter (2) aus einem Gleichspannungsschaltkreis über wenigstens eine Phase (u, v, w) mit elektrischem Strom versorgt wird und der Umrichter dazu ausgeführt ist, die wenigstens eine Phase auf wenigstens zwei Spannungsniveaus zu schalten, das Verfahren umfassend die Schritte:

Erzeugen von Schaltsequenzen, wobei jede Schaltsequenz eine Folge von Schaltübergängen des Umrichters mit einem ersten Schaltübergang umfasst;
Bewerten jeder der Schaltsequenzen mit einem Gütewert (S20);

Auswahl der Schaltsequenz mit einem minimalen Gütewert (S22);
Ansteuern der Schaltelemente des Umrichters mit dem ersten Schaltübergang der ausgewählten Schaltsequenz als gewählten Schaltübergang, so dass wenigstens eine Phase auf ein dem Schaltübergang entsprechendes Spannungsniveau geschaltet wird;
wobei die Schaltsequenzen folgendermaßen erzeugt werden:

(a) Erzeugen einer längeren Schaltsequenz aus einer kürzeren Schaltsequenz, wobei an die kürzere Schaltsequenz wenigstens ein möglicher Schaltübergang gehängt wird (S 14) und eine erste Schaltsequenz mit einem vorhergehend gewählten Schaltübergang initialisiert wird (S 10);
(b) Berechnen von Ausgangsgrößen der elektrischen Maschine für die längere Schaltsequenz basierend auf den Schaltübergängen der längeren Schaltsequenz (S14);
(c) Verwerfen der längeren Schaltsequenz, falls berechnete Ausgangsgrößen nicht innerhalb vordefinierter Grenzen liegen und/ oder berechnete Ausgangsgrößen sich mit zunehmender Zeit von einer vordefinierten Grenze entfernen (S16);

Iteratives Erzeugen von weiteren Schaltsequenzen aus der nicht verworfenen Schaltsequenz gemäß den Schritten (a) bis (c) (S 12 bis S 18),
**dadurch gekennzeichnet, dass**
das Berechnen von Trajektorien von Ausgangsgrößen auf einem mathematischen Model der rotierenden Maschine und auf einer Interpolation beruht.

2. Verfahren nach Anspruch 1, **dadurch gekennzeichnet, dass** die Ausgangsgrößen in einem Zeitintervall interpoliert werden, das eine vorbestimmte Anzahl diskreter Zeitschritte umfasst.

3. Verfahren nach Anspruch 2, **dadurch gekennzeichnet, dass** im Intervall für wenigstens drei Zeitpunkte die Ausgangsgrößen mit dem mathematischen Modell berechnet werden.

4. Verfahren nach einem der Ansprüche 1 bis 3, wobei der Gütewert auf den zu erwartenden Schaltverlusten des Umrichters oder der zu erwartenden Schaltfrequenz des Umrichters bei der jeweiligen Schaltsequenz basiert.

5. Verfahren nach einem der Ansprüche 1 bis 4, wobei die Schaltsequenzen in der Folge der Schalt-

übergänge Pauseelemente enthalten, wobei ein Pausenelement eine Schaltpause nach einem Schaltübergang definiert; wobei die Schaltpause durch das Berechnen von Ausgangsgrößen ermittelt wird; wobei das Berechnen von Ausgangsgrößen auf einem mathematischen Modell der rotierenden elektrischen Maschine oder auf einer Approximation basiert;

6. Verfahren nach Anspruch 5, weiter umfassend:

Erzeugen einer Schaltsequenz aus Schaltübergängen und Pauseelementen basierend auf einem verallgemeinerten Schalthorizont, der definiert, in welcher Reihenfolge Schaltübergänge und Pauseelemente an die Schaltsequenz angefügt werden.

7. Verfahren nach einem der vorhergehenden Ansprüche, wobei beim Berechnen von Ausgangsgrößen ermittelt wird, zu welchem Zeitpunkt in der Zukunft eine Trajektorie einer Ausgangsgröße eine obere oder untere vordefinierte Grenze trifft.

8. Verfahren nach Anspruch 7, wobei die Ermittlung des Zeitpunkts analytisch, unter Verwendung eines Optimierungsverfahren zur Nullstellen-Ermittlung, durch Approximation von trigonometrischen Funktion durch Taylorreihen und/oder durch Approximation von trigonometrischen Funktion durch stückweise polynomiale Funktionen erfolgt.

9. Verfahren nach Anspruch 7 oder 8, wobei der Statorflusswiderstand beim Ermitteln des Zeitpunkts in die Berechnung einfließt.

10. Verfahren nach einem der vorhergehenden Ansprüche, weiter umfassend:

Berechnen eines Gütewerts für die Schaltsequenz der Länge n während der Iteration.

11. Verfahren nach einem der vorhergehenden Ansprüche, weiter umfassend:

Berechnen einer unteren Grenze für Gütewerte basierende auf bereits berechneten Gütewerten von vollständigen Schaltsequenzen; Verwerfen von Schaltsequenzen deren Gütewert die untere Grenze für Gütewerte überschreitet.

12. Verfahren nach Anspruch 11, weiter umfassend:

Berechnen des Gütewertes unter Verwendung einer oberen Grenze für eine maximale erwartete Länge einer Schaltsequenz.

13. Verfahren nach einem der vorhergehenden Ansprüche, wobei zuerst der Gütewert einer vielversprechenden Schaltsequenz berechnet wird; wobei die vielversprechende Schaltsequenz basiert auf wenigstens einem aus:

einer optimalen Schaltsequenz eines vorhergehenden Steuerungszyklus, einer optimalen Schaltsequenz, die in einem vorhergehenden Optimierungsschritt mit einem kürzeren Schalthorizont als einem aktuellen Schalthorizont berechnet wurde.

14. Verfahren nach einem der vorhergehenden Ansprüche, wobei eine mit höchster Priorität zu untersuchende Schaltsequenz ermittelt wird, wobei während der nächsten Iteration die Schaltsequenz mit höchster Priorität untersucht wird.

15. Verfahren nach Anspruch 14, wobei die Priorisierung anhand wenigstens einer der folgenden Regeln erfolgt:

Priorisierung von Schaltsequenzen für die eine höhere Wahrscheinlichkeit besteht, dass sie zu einem niedrigen Gütewert führen; Priorisierung von Schaltsequenzen, für die eine höhere Wahrscheinlichkeit besteht, dass sie die Ausgangsgrößen innerhalb vordefinierter Grenzen halten und/oder die Ausgangsgrößen sich mit zunehmender Zeit den vordefinierten Grenze annähern; Priorisierung von Schaltsequenzen, für die aufgrund einer Abschätzung erwarten wird, dass sie zu langen Schaltpausen ohne Schaltübergänge führen; Priorisierung von Schaltsequenzen anhand ihrer Gütewerte; Priorisierung von Schaltsequenzen anhand ihrer Länge.

16. Verfahren nach einem der vorhergehenden Ansprüche, weiter umfassend:

Beenden der Erzeugung der Schaltsequenzen, wenn alle Schaltsequenzen bis zu einer vorbestimmten Länge erzeugt wurden.

17. Verfahren nach einem der vorhergehenden Ansprüche, weiter umfassend:

Beenden der Erzeugung der Schaltsequenzen, wenn eine obere Grenze für die Anzahl der erzeugten Schaltsequenzen erreicht ist oder die verfügbare Rechenzeit abgelaufen ist.

**18.** Verfahren nach einem der vorhergehenden Ansprüche, weiter umfassend:

Beenden der Erzeugung der Schaltsequenzen, wenn eine Schaltsequenz ermittelt wurde, deren Gütewert eine untere Grenze für Gütewerte um weniger als einen definierten Prozentsatz übersteigt.

**19.** Steuerung (10) für einen elektrischen Umrichter (2), die dazu ausgeführt ist, das Verfahren nach einem der Ansprüche 1 bis 18 durchzuführen.

**20.** Motorsystem umfassend:

eine rotierende elektrische Maschine (1);
einen elektrischen Umrichter (2) mit einer Steuerung (10) nach Anspruch 19, der dazu ausgeführt ist die rotierende elelctrische Maschine (1) mit Strom zu versorgen.

**21.** Computerprogramm, das, wenn es auf einem Prozessor (16) ausgeführt wird, den Prozessor anleitet, die Schritte des Verfahrens nach einem der Ansprüche 1 bis 18 durchzuführen.

**22.** Computerlesbares Medium, auf dem ein Computerprogramm gespeichert ist, das, wenn es auf einem Prozessor (16) ausgeführt wird, den Prozessor anleitet, die Schritte des Verfahrens nach einem der Ansprüche 1 bis 18 durchzuführen.

**Claims**

**1.** Method for operating a rotating electrical machine (1),
wherein the rotating electrical machine is supplied with electric current by a converter (2) from a DC voltage circuit via at least one phase (u, v, w), and the converter is designed to switch the at least one phase to at least two voltage levels,
the method comprising the following steps:

generating switching sequences, wherein each switching sequence comprises a series of switching transitions of the converter with a first switching transition;
evaluating each of the switching sequences with a quality value (S20);
selecting the switching sequence with a minimum quality value (S22);
driving the switching elements of the converter with the first switching transition of the selected switching sequence as the selected switching transition, with the result that at least one phase is switched to a voltage level which corresponds to the switching transition;

wherein the switching sequences are generated as follows:

(a) a relatively long switching sequence is generated from a relatively short switching sequence, wherein at least one possible switching transition is attached to the relatively short switching sequence (S14), and a first switching sequence with a preselected switching transition is initialized (S10);
(b) output variables of the electrical machine are calculated for the relatively long switching sequence on the basis of the switching transitions of the relatively long switching sequence (S14);
(c) the relatively long switching sequence is rejected if calculated output variables are not within predefined limits and/or calculated output variables become removed from a predefined limit as the time increases (S16);

further switching sequences are generated iteratively from the unrejected switching sequence in accordance with steps (a) to (c) (S12 to S18), **characterized in that**
the calculation of trajectories of output variables is based on a mathematical model of the rotating machine and on an interpolation.

**2.** Method according to Claim 1, **characterized in that** the output variables are interpolated in a time interval which includes a predetermined number of discrete time steps.

**3.** Method according to Claim 2,
**characterized in that**
in the interval, the output variables are calculated with the mathematical model for at least three points in time.

**4.** Method according to one of Claims 1 to 3,
wherein the quality value is based on the switching losses of the converter to be expected or on the switching frequency of the converter to be expected in the case of the respective switching sequence.

**5.** Method according to one of Claims 1 to 4,
wherein the switching sequences contain intermission elements in the series of switching transitions, wherein an intermission element defines a switching intermission after a switching transition; wherein the switching intermission is determined by the calculation of output variables;
wherein the calculation of output variables is based on a mathematical model of the rotating electrical machine or on an approximation.

6. Method according to Claim 5, further comprising:

   generating a switching sequence comprising switching transitions and intermission elements based on a generalized switching horizon, which defines the order in which switching transitions and intermission elements are joined onto the switching sequence.

7. Method according to one of the preceding claims, wherein, during the calculation of output variables, the time at which a trajectory of an output variable meets an upper or lower predefined limit in the future is determined.

8. Method according to Claim 7, wherein the determination of the time is performed analytically, using an optimization method for determining zeros, by approximation of trigonometric functions by Taylor series and/or by approximation of trigonometric functions by piecewise polynomial functions.

9. Method according to Claim 7 or 8, wherein the stator flux resistance enters the calculation when determining the time.

10. Method according to one of the preceding claims, further comprising:

    calculating a quality value for the switching sequence of the length n during the iteration.

11. Method according to one of the preceding claims, further comprising:

    calculation of a lower limit for quality values based on previously calculated quality values of complete switching sequences;
    rejection of switching sequences whose quality value exceeds the lower limit for quality values.

12. Method according to Claim 11, further comprising:

    calculating the quality value using an upper limit for a maximum expected length of a switching sequence.

13. Method according to one of the preceding claims, wherein first the quality value of a promising switching sequence is calculated;
    wherein the promising switching sequence is based on at least one of the following:

    an optimal switching sequence of a preceding control cycle,
    an optimal switching sequence which has been calculated in a preceding optimization step with a relatively short switching horizon as a present switching horizon.

14. Method according to one of the preceding claims, wherein a switching sequence to be investigated with the highest level of priority is determined, wherein, during the next iteration, the switching sequence with the highest level of priority is investigated.

15. Method according to Claim 14, wherein the prioritization is performed using at least one of the following rules:

    switching sequences for which there is a greater probability that said switching sequences will result in a low quality value are prioritized;
    switching sequences for which there is a greater probability that said switching sequences will keep the output variables within predefined limits and/or the output variables will come close to the predefined limit as time increases are prioritized;
    switching sequences for which, on the basis of an estimation, it is expected that said switching sequences will lead to long switching intermissions without any switching transitions are prioritized;
    switching sequences are prioritized using their quality values;
    switching sequences are prioritized using their length.

16. Method according to one of the preceding claims, further comprising:

    ending the generation of the switching sequences if all of the switching sequences up to a predetermined length have been generated.

17. Method according to one of the preceding claims, further comprising:

    ending the generation of the switching sequences if an upper limit for the number of switching sequences generated has been reached or the available computation time has elapsed.

18. Method according to one of the preceding claims, further comprising:

    ending the generation of the switching sequences if a switching sequence has been determined whose quality value exceeds a lower limit for quality values by less than a defined percentage.

19. Controller (10) for an electrical converter (2), which is designed to implement the method according to one of Claims 1 to 18.

20. Motor system comprising:

    a rotating electrical machine (1);
    an electrical converter (2) with a controller (10) according to Claim 19, which is designed to supply current to the rotating electrical machine (1).

21. Computer program which, if it is implemented on a processor (16), instructs the processor to implement the steps of the method according to one of Claims 1 to 18.

22. Computer-readable medium, on which a computer program is stored which, if it is implemented on a processor (16), instructs the processor to implement the steps of the method according to one of Claims 1 to 18.

## Revendications

1. Procédé de fonctionnement d'une machine électrique rotative (1),
la machine électrique rotative étant alimentée en courant électrique par un onduleur (2) à partir d'un circuit à tension continue par le biais d'au moins une phase (u, v, w) et l'onduleur étant réalisé de manière à commuter l'au moins une phase sur au moins deux niveaux de tension,
le procédé comprenant les étapes suivantes :

    génération de séquences de commutation, chaque séquence de commutation comprenant une suite de transitions de commutation de l'onduleur avec une première transition de commutation ;
    évaluation de chacune des séquences de commutation avec une valeur de qualité (S20) ;
    sélection de la séquence de commutation ayant une valeur de qualité minimale (S22) ;
    commande des éléments de commutation de l'onduleur avec la première transition de commutation de la séquence de commutation sélectionnée en tant que transition de commutation sélectionnée, de sorte qu'au moins une phase soit commutée à un niveau de tension correspondant à la transition de commutation ;
    les séquences de commutation étant générées comme suit :

        (a) génération d'une séquence de commutation plus longue à partir d'une séquence de commutation plus courte, au moins une transition de commutation possible étant rattachée à la séquence de commutation plus courte (S14) et une première séquence de commutation étant initialisée avec une transition de commutation sélectionnée précédemment (S10) ;
        (b) calcul de grandeurs initiales de la machine électrique pour la séquence de commutation plus longue en se basant sur les transitions de commutation de la séquence de commutation plus longue (S14) ;
        (c) rejet de la séquence de commutation plus longue si les grandeurs initiales calculées ne se trouvent pas dans des limites prédéfinies et/ou si les grandeurs initiales calculées s'éloignent d'une limite prédéfinie à mesure de l'écoulement du temps (S16) ;

    génération itérative de séquences de commutation supplémentaires à partir de la séquence de commutation non rejetée conformément aux étapes (a) à (c) (S12 à S18),
    **caractérisé en ce que** le calcul des trajectoires des grandeurs initiales repose sur un modèle mathématique de la machine rotative et sur une interpolation.

2. Procédé selon la revendication 1, **caractérisé en ce que** les grandeurs initiales sont interpolées dans un intervalle de temps qui comprend un nombre prédéterminé de pas de temps discrets.

3. Procédé selon la revendication 2, **caractérisé en ce que** les grandeurs initiales sont calculées avec le modèle mathématique dans l'intervalle pour au moins trois instants.

4. Procédé selon l'une des revendications 1 à 3, selon lequel la valeur de qualité se base sur les pertes de commutation attendues de l'onduleur ou sur la fréquence de commutation attendue de l'onduleur avec la séquence de commutation correspondante.

5. Procédé selon l'une des revendications 1 à 4, selon lequel les séquences de commutation contiennent des éléments de pause dans la série de transitions de commutation, un élément de pause définissant une pause de commutation après une transition de commutation ; selon lequel la pause de commutation est déterminée en calculant des grandeurs initiales ;
selon lequel le calcul des grandeurs initiales se base sur un modèle mathématique de la machine électrique rotative ou sur une approximation.

6. Procédé selon la revendication 5, comprenant en outre :

    la génération d'une séquence de commutation à partir des transitions de commutation et des éléments de pause en se basant sur un horizon de commutation généralisé qui définit dans quel ordre les transitions de commutation et les éléments de pause sont rattachés à la séquence de commutation.

7. Procédé selon l'une des revendications précédentes, selon lequel, lors du calcul des grandeurs initiales, il est déterminé à quel instant dans l'avenir une trajectoire d'une grandeur initiale rencontre une limite prédéfinie supérieure ou inférieure.

8. Procédé selon la revendication 7, selon lequel la détermination de l'instant est effectuée de manière analytique, en utilisant un procédé d'optimisation pour la détermination des points zéro, par approximation d'une fonction trigonométrique par des séries de Taylor et/ou par approximation d'une fonction trigonométrique par des fonctions polynomiales élément par élément.

9. Procédé selon la revendication 7 ou 8, selon lequel la résistance au flux de stator intervient dans le calcul lors de la détermination de l'instant.

10. Procédé selon l'une des revendications précédentes, comprenant en outre :

le calcul d'une valeur de qualité pour la séquence de commutation de longueur n pendant l'itération.

11. Procédé selon l'une des revendications précédentes, comprenant en outre:

le calcul d'une limite inférieure pour les valeurs de qualité en se basant sur les valeurs de qualité déjà calculées des séquences de commutation pleines ;
rejet des séquences de commutation dont la valeur de qualité dépasse la limite inférieure pour les valeurs de qualité.

12. Procédé selon la revendication 11, comprenant en outre :

le calcul de la valeur de qualité en utilisant une limite supérieure pour une longueur maximale attendue d'une séquence de commutation.

13. Procédé selon l'une des revendications précédentes, selon lequel la valeur de qualité d'une séquence de commutation très prometteuse est calculée en premier ; selon lequel la séquence de commutation très prometteuse se base au moins sur :

une séquence de commutation optimale d'un cycle de commande précédent, ou
une séquence de commutation optimale qui a été calculée dans une étape d'optimisation précédente avec un horizon de commutation plus court qu'un horizon de commutation actuel.

14. Procédé selon l'une des revendications précédentes, selon lequel une séquence de commutation à analyser avec une priorité supérieure est déterminée,
selon lequel la séquence de commutation ayant la priorité supérieure est analysée pendant l'itération suivante.

15. Procédé selon la revendication 14, selon lequel la priorité est définie en fonction d'au moins l'une des règles suivantes :

définition des priorités des séquences de commutation pour lesquelles il existe une forte probabilité pour qu'elles donnent lieu à une faible valeur de qualité,
définition des priorités des séquences de commutation pour lesquelles il existe une forte probabilité pour qu'elles maintiennent les grandeurs initiales à l'intérieur de limites prédéfinies et/ou pour que les grandeurs initiales se rapprochent des limites prédéfinies à mesure de l'écoulement du temps ;
définition des priorités des séquences de commutation pour lesquelles, du fait d'une estimation, il est attendu qu'elles donnent lieu à de longues pauses de commutation sans transitions de commutation ;
définition des priorités des séquences de commutation au moyen de leurs valeurs de qualité ;
définition des priorités des séquences de commutation au moyen de leur longueur.

16. Procédé selon l'une des revendications précédentes, comprenant en outre :

l'arrêt de la génération des séquences de commutation lorsque toutes les séquences de commutation jusqu'à une longueur prédéfinie ont été générées.

17. Procédé selon l'une des revendications précédentes, comprenant en outre :

l'arrêt de la génération des séquences de commutation lorsqu'une limite supérieure pour le nombre de séquences de commutation générées est atteinte ou
lorsque le temps de calcul disponible est écoulé.

18. Procédé selon l'une des revendications précédentes, comprenant en outre :

l'arrêt de la génération des séquences de commutation lorsqu'une séquence de commutation a été déterminée dont la valeur de qualité est supérieure à une limite inférieure pour les valeurs de qualité d'au moins un pourcentage défini.

**19.** Commande (10) pour un onduleur électrique (2) qui est réalisée de manière à mettre en oeuvre le procédé selon l'une des revendications 1 à 18.

**20.** Système à moteur comprenant :

une machine électrique rotative (1) ;
un onduleur électrique (2) muni d'une commande (10) selon la revendication 19, lequel est réalisé de manière à alimenter électriquement la machine électrique rotative (1).

**21.** Programme informatique qui, lorsqu'il est exécuté sur un processeur (16), commande le processeur pour effectuer les étapes du procédé selon l'une des revendications 1 à 18.

**22.** Support lisible par ordinateur sur lequel est enregistré un programme informatique qui, lorsqu'il est exécuté sur un processeur (16), commande le processeur pour effectuer les étapes du procédé selon l'une des revendications 1 à 18.

Fig. 1

Fig. 2a

Fig. 2b

Fig. 2c

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7256561 B

- EP 1670135 A

**In der Beschreibung aufgeführte Nicht-Patentliteratur**

- Model Predictive Direct Torque Control of a variable speed drive with a five-level inverter. INDUSTRIAL ELECTRONICS, 2009. IECON '09. 35th Annual Conference of IEEE. IEEE, 03. November 2009, 1203-1208

- Generalized Model Predictive Direct Torque Control: Long prediction horizons and minimization of switching losses. DECISION AND CONTROL, 2009 held jointly with the 2009 28th Chinese Control Conference. CDC/CCC 2009. Proceedings ofthe 48th IEEE conference. IEEE, 15. Dezember 2009, 6799-6804

- Model Predictive Direct Torque Control Part I: Concept, Algorithm, and Anaysis. IEEE Transactions on Industrial Electronics. IEEE Service Center, 01. Juni 2009, vol. 56, 1894-1905